# EUROPÄISCHE PATENTSCHRIFT

(11) **EP 2 482 045 B1**
(45) Veröffentlichungstag und Bekanntmachung des Hinweises auf die Patenterteilung: **22.04.2015**
(21) Anmeldenummer: 12152288.2
(22) Anmeldetag: 24.01.2012
(51) Int. Cl.: G01F 17/00, G01F 23/14, G01N 35/10, B01L 99/00

(54) **Verfahren zum Erfassen der Befüllbarkeit eines Abfallbehälters von Mikroplatten-Waschgeräten**
Method for detecting whether a waste container of microboard washing machines can be filled
Procédé de détection de la capacité de remplissage d'un récipient de déchets d'appareils de lavage à microplaques

(30) Priorität: 28.01.2011 CH 1502011; 28.01.2011 US 201161437331 P
(43) Veröffentlichungstag der Anmeldung: 01.08.2012
(73) Patentinhaber: Tecan Trading AG, 8708 Männedorf (CH)
(72) Erfinder: Streit, Wolfgang, 5400 Hallein (AT); Koota, Juha, 83471 Berchtesgaden (DE); Fuchs, Wolfgang, 5020 Salzburg (AT)
(74) Vertreter: OK pat AG

(56) Entgegenhaltungen:
- EP-A1- 2 017 625
- WO-A1-2005/114116
- DE-A1- 19 648 688
- US-A- 6 121 049
- US-A1- 2009 032 064
- US-A1- 2009 133 512

## Beschreibung

Die Erfindung betrifft gemäss dem Oberbegriff des unabhängigen Anspruchs 1 ein Verfahren zum Erfassen der Befüllbarkeit eines Abfallbehälters eines Mikroplatten-Waschgeräts. Dieses Waschgerät umfasst dabei zumindest eine Wasch-Nadel zum Aspirieren von Flüssigkeiten und einen im Wesentlichen luftdicht verschliessbaren Abfallbehälter zum Auffangen von aspirierten Flüssigkeiten. Zudem umfasst das Mikroplatten-Waschgerät eine Pumpe zum Erzeugen eines Unterdrucks in dem Abfallbehälter. Die Pumpe und die Wasch-Nadel sind jeweils über zumindest eine Leitung mit dem Abfallbehälter verbunden. Schliesslich umfasst das Mikroplatten-Waschgerät zumindest einen Drucksensor und eine Sensorsteuerung. Der Drucksensor ist dabei zum Bestimmen eines Luftdrucks in dem Abfallbehälter mit diesem Abfallbehälter wirkverbunden.

Aus dem Stand der Technik sind Verfahren zum Bestimmen von Luftvolumen in Behältern an sich bekannt. Solche Verfahren kommen dann zum Einsatz, wenn z.B. der aktuelle Füllstand in dem Behälter oder das Restvolumen, mit welchem der Behälter noch befüllbar ist, bestimmt werden soll. Basierend auf dieser Bestimmung kann dann z.B. entschieden werden, mit wie viel Flüssigkeit der Behälter noch befüllt werden kann, oder ob der Behälter geleert werden muss, bevor er weiter befüllt wird.

So wird in der Patentschrift DE 195 45 981 A1 eine Füllstandsbestimmung in Behältern oder tankartigen Gefässen offenbart. Insbesondere wird der Füllgrad von Flüssigkeitsbehältern oder Silos zum Lagern von Schüttgut bestimmt. Ähnlich ist aus DE 197 50 620 A1 das Bestimmen des freien Volumens in einem abgeschlossenen Behälter (in diesem Fall in Kraftstofftanks von Kraftfahrzeugen) bekannt. Dabei wird jeweils zunächst ein vom Umgebungsdruck abweichender Behälterdruck eingestellt. Für die Füllstandsbestimmung wird dann die Zeit bis zum Ausgleich mit dem Umgebungsdruck ermittelt. Anhand der gemessenen Zeit und des bekannten, theoretischen maximalen Behältervolumens wird dann der Behälterfüllstand berechnet.

Aus der DE 196 48 688.2 ist ein Verfahren zum Erfassen der Füllstandsmenge eines Tanksystems bekannt. Hier wird ebenfalls mit einer Druckquelle eine Druckänderung in dem Tanksystem erzeugt. Zum Erfassen der Füllstandsmenge in diesem Tanksystem wird dann der zeitliche Verlauf des Differenzdrucks während des Druckaufbau-/ oder Druckabbauvorganges kontinuierlich erfasst und aus diesem auf den Füllstand geschlossen. Das Tanksystem umfasst dabei eine Druckteileranordnung mit mindestens einem Strömungswiderstand. So kann, wenn sowohl Füllstand als auch Dichtigkeit überprüft werden soll, auf zusätzliche Sensoren verzichtet werden.

Die Füllstandshöhe kann alternativ auch mit Hilfe des hydrostatischen Drucks, der durch die Höhe der Flüssigkeitssäule im Behälter herrscht, bestimmt werden. Dieser hydrostatische Druck dient dann als direktes Mass für den Füllstand. Analog dazu kann die Menge der sich in einem Behälter befindlichen Flüssigkeit mittels Gewichtsmessung ermittelt werden.

In der Labortechnik wird die Bestimmung von Füllständen in Flüssigkeitsbehältern insbesondere bei Abfallbehältern von Laborautomaten, z.B. von automatisierten Mikroplatten-Waschgeräten, angewendet. Solche Mikroplatten-Wascher erlauben es, automatisiert Zellen, magnetische Beads oder kleinere Biomoleküle, welche in den Wells von typischen Mikroplatten immobilisiert sind, mit biokompatiblen Flüssigkeiten wie Puffern zu waschen. Das Prinzip des Immobilisierens für Zell-basierte oder Bead-basierte Assays, oder für Enzyme-linked Immunosorbent Assays (ELI-SAs) ist aus dem Stand der Technik lange bekannt und soll daher an dieser Stelle nicht wiederholt werden. Bekannt ist ebenfalls, dass beim Vorbereiten oder Durchführen solcher Assays in der Regel einer oder mehrere Waschschritte durchgeführt werden, bei denen die Flüssigkeit in einzelnen Wells abgesaugt (aspiriert) wird und durch Zugabe (Dispensieren) einer frischen Flüssigkeit ersetzt wird. Beim Dispensieren wird dabei mittels einer Druckpumpe Flüssigkeit aus einem oder mehreren Vorratsbehältern in entsprechende Leitungen gedrückt und über eine Dispenser-Nadel in ein Well abgegeben. Beim Aspirieren wird dagegen die Flüssigkeit mit einer Saugpumpe aus dem Well angesaugt und über separate Leitungen in vorbereitete Abfallbehälter überführt.

Da beim Behandeln von Zellen oder beim Durchführen biologischer oder biochemischer Assays mit Biomolekülen häufig infektiöse oder potentiell infektiöse Flüssigkeiten aus Probengefässen in die Abfallbehälter überführt werden, ist es hier besonders wichtig, eine möglichst kontinuierliche Kontrolle des Füllstands in diesen Abfallbehältern durchzuführen. Nur so kann vermieden werden, dass zu viel aus Probengefässen abgesaugte Flüssigkeit in die entsprechenden Abfallbehälter geführt wird, dieser dann überläuft und so eine den Sicherheitsbestimmungen entsprechende Entsorgung der infektiösen oder potentiell infektiösen Flüssigkeiten behindert oder gar verunmöglicht wird. Typische Flüssigkeiten, die zum Waschen biologischer Proben von Mikroplatten-Waschgeräten bewegt werden, sind zum Beispiel Medien für Zellkulturen, Waschpuffer, Reaktionslösungen, Lösungsmittel für biologische Proben wie Nukleinsäuren, Proteinen oder ganzen Zellen, oder flüssige Überstände von solchen biologischen Proben.

In solchen Abfallbehältern von Mikroplatten-Waschern werden typischerweise sogenannte Schwimmer-basierte Sensoren zur Füllstandsbestimmung verwendet. Ein solcher Schwimmer ist ein Körper mit geringer Dichte und schwimmt so auf der Flüssigkeit in dem Behälter. Er ist z.B. mit einem Schalter, einem Sensor oder einem Wegaufnehmer (Potentiometer) verbunden. Die Position des Schwimmers im Flüssigkeitsbehälter kann dann zum Beispiel durch den Sensor erfasst werden. Alternativ und in der einfachsten Variante umfasst der Schwimmer keinen Sensor, sondern ist z.B. farbig auffällig gestaltet, so dass der Flüssigkeitspegel direkt per Auge von der relativen Höhe des Schwimmers im Behälter abgelesen werden kann. Dies ermöglicht es dem Operator, direkt zu kontrollieren, wie viel Flüssigkeit zum aktuellen Zeitpunkt noch aus den Probengefässen abgesaugt und in den Abfallbehälter überführt werden kann. Dementsprechend kann dann bestimmt werden, wann der Abfallbehälter gewechselt werden muss, um ein Überlaufen zu verhindern. Beispielhaft für einen im Stand der Technik bekannten Schwimmer-basierten Sensor sei an dieser Stelle der Sensor A3413001 der Firma Binsack (Binsack Reedtechnik GmbH, Lämmerspieler Strasse 87-89, 63165 Mühlheim / Main, Deutschland) genannt, der unter diesem Namen käuflich erhältlich ist und unter anderem in dem Mikroplatten-Wascher mit dem Namen Power Washer 384™ des aktuellen Anmelders zur Füllstandsbestimmung in Abfallbehältern zur Anwendung kommt.

Die Verwendung solcher Schwimmer-basierter Sensoren hat den Vorteil, dass direkt im Behälter die Standhöhe der gelagerten Flüssigkeit abgelesen bzw. gemessen werden kann. Allerdings sind solche Schwimmer-basierten Sensoren, die ja auf der Oberfläche der Abfall-Flüssigkeit im Abfallbehälter des Mikroplatten-Waschers schwimmen, den abgesaugten Flüssigkeiten direkt ausgesetzt. Probleme können sich insbesondere dann ergeben, wenn z.B. gebrauchte Medien von Zellkulturen oder andere Zellüberstände in einen Abfallbehälter überführt werden sollen. Solche gebrauchten Medien können ausgefallene Proteine enthalten oder abgesaugte Zellen, die verklumpen und sich als grössere, z.T. klebrige Partikel auf dem im Behälter angeordneten Sensor ablagern können. So kann die Funktionsfähigkeit des Sensors stark beeinflusst werden, oder der Sensor wird sogar vollständig blockiert. Zeigt der Sensor jedoch nicht mehr die korrekte Füllhöhe an, besteht wiederum die Gefahr, dass zu viel Flüssigkeit in den Abfallbehälter eingeführt wird, und die Flüssigkeit aus der Flasche läuft. Besonders problematisch ist diese Situation, wenn biologische Abfallflüssigkeiten in dem Abfallbehälter aufgefangen werden, die zur korrekten Entsorgung dekontaminiert, also z.B. autoklaviert werden müssen (z.B. bei infektiösem Material/Flüssigkeit). Ein System, in dem ein solcher Schwimmer-basierter Sensor verwendet wird, benötigt damit entsprechend viel Aufmerksamkeit und Pflege durch den Benutzer.

Aus dem Dokument EP 2 017 625 A1 ist ein automatisches Analysegerät bekannt, welches Transferpipetten, eine Pipetten-Waschstation und einen Abfallbehälter umfasst. Eine Saugvorrichtung ermöglicht den Transferpipetten das Aufsaugen von Abwasser einer Reaktion aus Reaktionsgefässen und das Entsorgen des Abwassers im Abfallbehälter. In der Pipetten-Waschstation werden anschliessend die Pipetten gereinigt, indem eine Reinigungsflüssigkeit aufgesogen und wieder abgegeben wird. Das Analysegerät umfasst zum Feststellen einer Verstopfung dieser Transferpipetten Drucksensoren, welche jeweils nahe den Transferpipetten angeordnet sind.

Aus dem Dokument WO 2005/114116 A1 ist das Messen des Flüssigkeits- oder Luftvolumens in einem Behälter mit bekanntem Totalvolumen bekannt. Das z.B. an einen Benzintank anschliessbare Messgerät umfasst eine Pumpe, ein Ventil mit einem kalibrierten Flussbegrenzer und ein Druckmessgerät. Mit der Pumpe wird im Behälter eine Druckdifferenz gegenüber der Umgebung erzeugt und über den Flussbegrenzer und das Ventil wird dieser Druck im Behälter wieder ausgeglichen. Anhand der benötigten Zeit zum Ausgleichen eines bestimmten Druckunterschieds wird das aktuelle Luftvolumen und damit auch das aktuelle Flüssigkeitsvolumen im Behälter bestimmt.

Die Aufgabe der vorliegenden Erfindung ist es, ein Verfahren vorzuschlagen, mit dem einfach und sicher erfasst werden kann, ob Abfall-Flüssigkeiten in Abfallbehälter von Mikroplatten-Waschern überführt werden können, ohne dass diese Abfallbehälter überlaufen.

Diese Aufgabe mit den Merkmalen des unabhängigen Anspruchs 1 gelöst, indem ein Verfahren zum Erfassen der Befüllbarkeit eines Abfallbehälters von einem Mikroplatten-Waschgerät vorgeschlagen wird. Das Mikroplattenplatten-Waschgerät umfasst zumindest eine Wasch-Nadel zum Aspirieren von Flüssigkeiten, einen im Wesentlichen luftdicht verschliessbaren Abfallbehälter zum Auffangen von aspirierten Flüssigkeiten und eine Pumpe zum Erzeugen eines Unterdrucks in dem Abfallbehälter. Die Pumpe und die Wasch-Nadel sind jeweils über zumindest eine Leitung mit dem Abfallbehälter verbunden. Zudem umfasst das Mikroplatten-Waschgerät zumindest einen Drucksensor und eine Sensorsteuerung, wobei der Drucksensor zum Bestimmen eines Luftdrucks in dem Abfallbehälter mit diesem wirkverbunden ist.

Das erfindungsgemässe Verfahren ist dadurch gekennzeichnet, dass das Mikroplatten-Waschgerät zudem ein Ventil zum Absperren der Leitung zwischen der Wasch-Nadel und dem Abfallbehälter umfasst, und dass das Verfahren die folgenden Schritte umfasst:
a) Festlegen einer Schwellen-Zeit, die für ein bestimmtes Luft- bzw. Sicherheits-Restvolumen in einem Abfallbehälter mittels einer separaten Kalibriermessung gemessen wurde, und welches die Zeit eines Unterduck-Abbaus innerhalb eines vorbestimmten Unterdruck-Testbereichs für das Sicherheits-Restvolumen eines Abfallbehälters ist;
b) Schliessen des Ventils zwischen der Wasch-Nadel und dem Abfallbehälter und Erzeugen eines Unterdrucks in dem Abfallbehälter bis zumindest einem unteren Grenzdruck eines vorbestimmten Unterdruck-Testbereichs;
c) Absperren der pumpenseitigen Leitung zu dem Abfallbehälter;
d) Öffnen des Ventils zwischen der Wasch-Nadel und dem Abfallbehälter und Auslösen eines Unterdruck-Abbaus in dem Abfallbehälter;
e) Messen des Drucks in dem Abfallbehälter und Messen einer Test-Zeit für den Unterdruck-Abbau zwischen dem unteren Grenzdruck bis zu einem oberen Grenzdruck des Unterdruck-Testbereichs, wobei der obere Grenzdruck tiefer ist als der Umgebungsdruck;
f) Vergleichen der gemessenen Test-Zeit mit einer vor der Messung festgelegten Schwellen-Zeit, und
g) Entscheiden, dass:
   g1) der Abfallbehälter nicht befüllbar ist, wenn die Test-Zeit die Schwellen-Zeit unterschreitet, oder
   g2) der Abfallbehälter befüllbar ist, wenn die Test-Zeit gleich ist wie die Schwellen-Zeit, oder
   g3) der Abfallbehälter befüllbar ist, wenn die Test-Zeit die Schwellen-Zeit überschreitet;
   wobei vor der Messung gemäss Schritt e):
   i) eine erste Toleranz-Zeit festgelegt wird, welche die Zeit eines Unterdruck-Abbaus in dem Unterdruck-Testbereich für ein Restvolumen eines Abfallbehälters ist, welches um ein erstes Volumen grösser ist als das im Schritt a) bestimmte Sicherheits-Restvolumen für die Schwellen-Zeit; und
   ii) eine zweite Toleranz-Zeit festgelegt wird, welche die Zeit eines Unterdruck-Abbaus in dem Unterdruck-Testbereich für ein Restvolumen eines Abfallbehälters (1) ist, welches um ein zweites Volumen grösser ist als die Summe des im Schritt a) bestimmten Sicherheits-Restvolumens für die Schwellen-Zeit mit dem Restvolumen für die erste Toleranz-Zeit.

Zusätzliche bevorzugte und erfinderische Merkmale ergeben sich aus den jeweils abhängigen Ansprüchen.

Die vorliegende Erfindung umfasst die folgenden Vorteile:
- Die bei jedem Mikroplatten-Waschgerät standardmässig vorhandene Saugpumpenfunktion und der ebenfalls umfasste, interne Drucksensor kann direkt für das Bestimmen des aktuellen Restvolumens der Abfallbehälter verwendet werden. So kann "geräteintern" sicher und einfach bestimmt werden, mit wie viel weiterem Flüssigkeitsvolumen der Abfallbehälter gefüllt werden kann, bevor er entleert werden muss, ohne dass schwerwiegende technische Umbauten am Gerät durchgeführt werden müssen.
- Typische Nachteile von Schwimmer-basierten Sensor-Systemen zur Füllstandsbestimmung, wie Verkleben der Sensoren, kann durch den vereinfachten Aufbau vermieden werden. Dies ist vor allem beim Arbeiten mit biologischem Material, wie z.B. Zellen, von Relevanz. Somit stellt das erfindungsgemässe Verfahren eine deutlich zuverlässigere Methode zum Bestimmen des aktuellen Restvolumens als der Stand der Technik bereit.
- Zusätzlich zum Bestimmen des Luftvolumens in einem Abfallbehälter kann ohne weitere strukturelle Änderungen die Dichtigkeit des Waschsystems überprüft werden.

Die vorliegende Erfindung wird im Folgenden an Hand der dieser Anmeldung beigefügten Figuren näher erläutert. Dabei offenbaren diese Figuren bevorzugte Varianten eines Mikroplatten-Waschgeräts zum Durchführen der Erfindung und beispielhafte Messungen mit dem erfindungsgemässen Verfahren. Der Umfang der vorliegenden Erfindung wird jedoch durch die Figuren nicht eingeschränkt. Kombinationen der Merkmale der gezeigten bzw. beschriebenen Varianten gehören zum Umfang der Erfindung. Dabei zeigen:
- Fig. 1: Eine Übersichtsdarstellung einer einfachen Variante eines Mikroplatten-Waschgeräts zum Durchführen des erfindungsgemässen Verfahrens; mit einer Saugpumpe und einem Abfallbehälter;
- Fig. 2: Eine Übersichtsdarstellung einer zweiten Variante eines Mikroplatten-Waschgeräts zum Durchführen des erfindungsgemässen Verfahrens; mit einer kombinierten Saug/Druckpumpe, zwei Abfallbehältern und weiteren optionalen Merkmalen;
- Fig. 3: Eine Übersichtsdarstellung einer dritten Variante eines Mikroplatten-Waschgeräts zum Durchführen des erfindungsgemässen Verfahrens; mit einer Saugpumpe, einer separaten Druckpumpe und weiteren optionalen Merkmalen;
- Fig. 4: Eine schematische Übersicht über ein Schaltschema eines Mikroplatten-Waschgeräts zum Durchführen des erfindungsgemässen Verfahrens;
- Fig. 5: Eine beispielhafte Einzelmessung des zeitlichen Druckverlaufs zum Erfassen der Befüllbarkeit eines Abfallbehälters unter Verwendung von Unterdruck;
- Fig. 6: Eine schematische Übersicht des Verhältnis zwischen Restvolumen Luft in einem Abfallbehälter und entsprechenden Unterdruck-Abbau-Zeiten in dem vorbestimmten Unterdruck-Testbereich, mit beispielhaft festgelegter Schwellen-Zeit, erster Toleranz-Zeit und zweiter Toleranz-Zeit.

Das grundlegende Funktionsprinzip von Mikroplatten-Waschgeräten 2 ist aus dem Stand der Technik generell bekannt; beispielhaft sei an dieser Stelle die Power Washer 384™ Plattform des aktuellen Anmelders genannt. Ein solches Mikroplatten-Waschgerät 2 umfasst einen oder mehr Vorratsbehälter 9 für Flüssigkeiten 10, die mit einer oder mehreren Wasch-Nadeln 5 in verschiedenste Probengefässe (Wells 18 einer Mikroplatte 17) dispensiert werden sollen. Ebenfalls umfasst es einen oder mehr Abfallbehälter 1, in die Flüssigkeiten 10, die aus solchen Probengefässen abgesaugt wurden, zur späteren Entsorgung überführt werden. Typischerweise wird zum Dispensieren von Flüssigkeiten 10 in den Leitungen 6" und im Vorratsbehälter 9 eines solchen Waschers 2 ein Überdruck mittels einer Druckpumpe 16 erzeugt. Zum Aspirieren von Flüssigkeiten 10 dagegen wird mittels einer Saugpumpenfunktion bzw. einer Saugpumpe 3 ein Unterdruck in der Leitung 6' und im Abfallbehälter 1 erzeugt, durch den die Flüssigkeit 10 in die Wasch-Nadel 5, dann in die Leitung 6' und schliesslich in den Abfallbehälter 1 angesaugt wird.

Als Mikroplatte 17 werden im Zusammenhang mit der vorliegenden Erfindung Multiwellplatten bezeichnet, die eine Vielzahl an Wells oder Behälter aufweisen, welche in einem Array angeordnet sind. Speziell bevorzugte Mikroplatten weisen zumindest annähernd die Masse und den Footprint einer Mikroplatte nach dem SBS Standard auf, wie dieser vom American National Standards Institute (ANSI) veröffentlicht wurde. Bekannt sind beispielsweise Mikroplatten, deren Wells mit einem Rundboden, Flachboden oder V-Boden ausgestattet sind. Dabei können die Wells als "normale Wells", als sogenannte "Deep Wells", oder auch als "Low Volume Wells" ausgebildet sein. Allen Mikroplatten mit den unterschiedlichsten Well-Formen ist gemeinsam, dass sie eine normierte Grundfläche, also einen normierten "Footprint" aufweisen, und dass der Achsabstand der jeweils in einem Array angeordneten Wells ebenfalls normiert ist. Dieser Achsabstand beträgt z.B. bei 24-Well (4 x 6) Platten 18 mm, bei 96-Well (8 x 12) Platten 9 mm und bei 384-Well (16 x 24) Platten 4.5 mm. Für eine Verwendung in dem erfindungsgemässen Verfahren sind aber ebenfalls Platten geeignet, welche lediglich ein grosses Well 18 aufweisen, solange sie den typischen, normierten Mikroplatten-Footprint aufweisen.

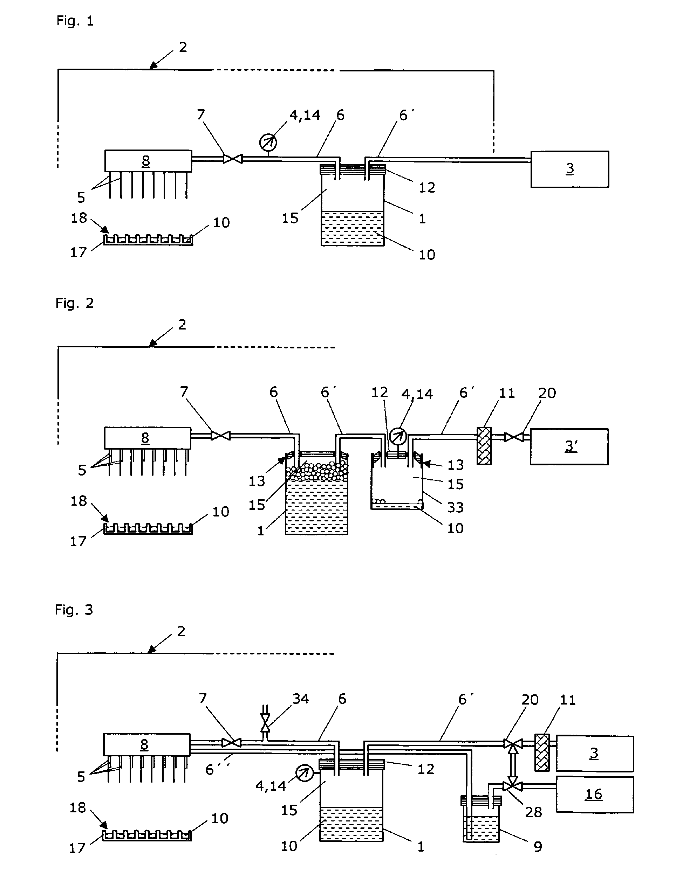

In den Figuren 1 bis 3 sind verschiedene Varianten eines Mikroplatten-Waschgeräts 2 dargestellt, welche zum Durchführen des erfindungsgemässen Verfahrens geeignet sind. Die einzelnen strukturellen Elemente dieser gezeigten Varianten sind beliebig miteinander kombinierbar. Zudem liegt das Auswählen und Positionieren der einzelnen Elemente, insbesondere von Drucksensor 4, Ventil 7 und Filter 11, sowie die Wahl der Leitungsdimensionen und deren Anordnung im Rahmen des Wissens eines Fachmannes.

Die Figur 1 zeigt eine Übersicht über eine einfachste Variante eines solchen Mikroplatten-Waschgeräts 2. Hier wird die bereits vorhandene Pumpe 3 des Mikroplatten-Waschgeräts 2 nicht nur zum Aspirieren von Flüssigkeiten 10 aus Probengefässen und zum Transport dieser aspirierten Flüssigkeiten 10 in den Abfallbehälter 1 verwendet, sondern ebenfalls zum Erfassen der Befüllbarkeit des Abfallbehälters 1. Es ist dabei unerheblich, ob die Pumpe 3 als eine reine Saugpumpe ausgebildet ist, oder ob es sich um eine Pumpe 3 handelt, die unter anderem die Saugpumpenfunktion bereitstellt. Reine Saugpumpen sind z.B. klassische Vakuumpumpen, Drehschieberpumpen oder Wasserstrahlpumpen; dabei verfügen Vakuumpumpen in der Regel über ein eigenes Ventil 20, während Drehschieberpumpen und Wasserstrahlpumpen zur Steuerung in der Regel ein separates Ventil 20 benötigen. Die Saugpumpenfunktion kann aber auch eine kombinierte Saug-/Druckpumpe 3' bereitstellen. Diese Variante ist in Figur 2 dargestellt.

Die Pumpe 3 zum Erzeugen eines Unterdrucks kann als ein internes Geräte-Modul ausgebildet sein, also vollständig (funktional und strukturell) in das Mikroplatten-Waschgerät 2 integriert sein. Alternativ kann die Pumpe 3 des Mikroplatten-Waschgeräts 2 zum Erzeugen des Unterdrucks eine externe Pumpe sein, welche jedoch so mit dem Gerät 2 funktional verbunden ist, dass die Saugpumpenfunktion einen inhärenten Teil des Mikroplatten-Waschgeräts 2 bildet. Beispielhaft sei eine externe Hauspumpe genannt, die über entsprechenden Leitungen 6' ("Hausvakuum") mit dem Mikroplatten-Waschgerät 2 bzw. dessen Abfallbehälter 1 verbunden ist. In jedem Fall bietet die Verwendung der geräte-internen Saugpumpenfunktion für die Durchführung des erfindungsgemässen Verfahrens den Vorteil, dass keine grossen Ein- und/oder Umbaumassnahmen an dem Gerät vorgenommen werden müssen und so die Komplexität des Mikroplatten-Waschgeräts 2 gering gehalten werden kann.

Wenn zum Durchführen des erfindungsgemässen Verfahrens anstelle der Verwendung von Unterdruck alternativ ein Überdruck angelegt wird, kann die zum Dispensieren in jedem Mikroplatten-Waschgerät 2 vorhandene Druckpumpenfunktion 16 zum Erfassen der Befüllbarkeit des Abfallbehälter 1 verwendet werden. Figur 3 zeigt vollständig ein Mikroplatten-Waschgerät 2 sowohl mit der Aspirier- als auch mit der Dispensier-Funktion. Ist die zum Aspirieren verwendete Pumpe 3 des Mikroplatten-Waschgeräts 2 als eine kombinierte Saug/Druckpumpe 3' ausgebildet, wie in Figur 2 gezeigt, kann mit der gleichen Pumpe 3' entweder ein Unterdruck in dem Abfallbehälter 1 oder alternativ ein Überdruck in diesem erzeugt werden.

Verwendbare Pumpen bzw. Pumpensysteme zum Erzeugen eines Unterdrucks sind aus dem Stand der Technik gut bekannt. Als eine für die Durchführung des erfindungsgemässen Verfahrens gut geeignete Pumpe 3 des Mikroplatten-Waschgeräts sei an dieser Stelle beispielhaft die Thomas Membranpumpe des Typs 8011 ZVP 35 (Gardner Denver Thomas GmbH, Benzstrasse 28, 82178 Puchheim, Deutschland) genannt.

In Figur 1 ist schematisch ein Waschkopf 8 mit einer Reihe von acht Wasch-Nadeln 5 gezeigt. Mit diesem Waschkopf 8 und der Saugpumpenfunktion kann aus allen Wells 18 einer Achter-Reihe gleichzeitig Flüssigkeit abgesaugt werden.

Ebenfalls bekannt und in den Figuren 2 und 3 dargestellt sind Waschköpfe 8 mit einer Reihe von acht Wasch-Nadeln 5 zum Aspirieren von Flüssigkeiten 10 und zusätzlichen acht Wasch-Nadeln 5 zum Dispensieren von Flüssigkeiten 10. Dabei sind bevorzugt jeweils eine Aspirier-Nadel und eine Dispensier-Nadel paarweise am Waschkopf 8 angeordnet, so dass simultan Flüssigkeit 10 aus einem Well 18 aspiriert und in das gleiche Well 18 über eine separate Wasch-Nadel 5 frische Flüssigkeit 10 dispensiert werden kann. Solche Waschköpfe 8 sind besonders zum indexierten Waschen von 96-Well- und 348-Well-Mikroplatten geeignet. Zudem ist die Verwendung von Nadel-Paaren aus jeweils einer Aspirier- und einer Dispensier-Nadel bevorzugt, da so die Leitung von den Abfallflüssigkeiten und den frischen Waschflüssigkeiten in separaten Leitungssystemen erfolgt und die Kontaminationsgefahr entsprechend verringert werden kann.

Nicht in den Figuren dargestellt, aber ebenfalls bekannt und zum Durchführen des erfindungsgemässen Verfahrens geeignet sind Waschköpfe 8, welche in der einfachsten Ausführungsform lediglich eine Wasch-Nadel 5 aufweisen. Mit einem solchen Waschkopf 8 kann jeweils nur ein Well 18 zu einem Zeitpunkt bearbeitet werden. Bei einer Mehrzahl von Wells 18 wird damit ein Well 18 nach dem anderen bedient. Ein solcher einfacher Waschkopf 8 ist z.B. geeignet, Mikroplatten mit nur einem grossen Well zu bedienen.

Ebenfalls nicht in den Figuren gezeigt aber aus dem Stand der Technik bekannt und für das Durchführen des erfindungsgemässen Verfahrens geeignet sind Waschköpfe 8, welche je 16 oder gar je 96 bzw. 384 Aspirier-Nadeln und Dispensier-Nadeln umfassen. Entsprechend umfasst beispielsweise ein Waschkopf mit 96 Aspiriernadeln und 96 Dispensier-Nadeln total 192 Wasch-Nadeln, so dass in allen Wells 18 einer Standard-96-Well-Mikroplatte 17 gleichzeitig abgesaugt und ohne Wechsel des Waschkopfes 8 dispensiert werden kann. Ist der Durchmesser jeder dieser Nadeln zudem an die Wellgrösse einer 384-Well-Mikroplatte angepasst, kann dieser 96er Waschkopf entsprechend auch zum indexierten Waschen einer 384-Well-Mikroplatte verwendet werden. Solche 96er oder 384er Waschköpfe sind besonders bevorzugt für die Durchführung des erfindungsgemässen Verfahrens.

Waschköpfe 8 mit zwei separaten Wasch-Nadel-Systemen, also separaten Wasch-Nadeln 5 zum Aspirieren und zum Dispensieren, weisen entsprechend zwei separate Kanalsysteme zum Versorgen des jeweiligen Wasch-Nadel-Systems auf (nicht gezeigt). Der Aufbau solcher Kanalsysteme gehört zum Wissen des Fachmanns und wird daher an dieser Stelle nicht weiter besprochen.

Typischerweise kann ein Mikroplatten-Waschgerät 2 mit verschiedenen Waschköpfen 8 ausgestattet werden. Überraschenderweise konnte gezeigt werden, dass auch bei der Verwendung verschiedener Waschköpfe 8 an einem Mikroplatten-Waschgerät 2 und verschiedener Abfallbehälter 1 die gleichen Kalibrierdaten zum Erfassen der Befüllbarkeit des Abfallbehälters 1 verwendet werden können. Diese "Universalität" kann mit den folgenden Annahmen begründet werden:
Das erfindungsgemässe Verfahren beruht auf einer Zeitmessung eines Unterdruck-Abbaus. Dieser wird durch Öffnen des Ventils 7 zwischen dem Abfallbehälter 1 und dem Waschkopf 8 und dem Einströmen von Luft durch die Wasch-Nadeln 5 in die Leitungen 6 und den Abfallbehälter 1 ermöglicht. Typischerweise ist das geöffnete Ventil 7 der Ort des Systems mit dem kleinsten und damit die Einström-Menge begrenzenden Strömungsquerschnitt. Dies ist insbesondere bei der Verwendung eines 96er Standard-Waschkopfes (mit 96 Aspirier- und 96 Dispensier-Nadeln) oder eines 96er Indexing-Waschkopfes (dessen Nadeln an die Grössenverhältnisse einer 384-Well-Mikroplatte angepasst sind) der Fall. Zwar weist jede Wasch-Nadel 5 dieser Waschköpfe allein betrachtet einen kleineren Strömungsquerschnitt auf als das geöffnete Ventil 7. Durch die grosse Zahl der Wasch-Nadeln ist die Summe der Nadelquerschnitte jedoch so gross, dass total ein deutlich grösserer Strömungsquerschnitt für das Einströmen von Luft in das System zur Verfügung steht. So kann eine deutlich grössere Luftmenge pro Zeit durch die Wasch-Nadeln 5 einströmen als durch das geöffnete Ventil 7 durchströmen kann. Die Kanäle im Waschkopf selbst sind nicht strömungsbegrenzend. Entsprechend würde diese Universalität weiterhin bestehen, wenn alternativ ein Ventil 7 mit einem grösseren Strömungsquerschnitt und Waschkopf 8 mit einer geringeren Anzahl Wasch-Nadeln 5 verwendet wird, aber gezielt in der Leitung 6 zwischen Waschkopf 8 und Abfallbehälter 1 eine künstliche Verengung eingebaut wird.

Wie in Figur 1 gezeigt, umfasst die einfachste Ausführungsform eines zum Durchführen des erfindungsgemässen Verfahrens geeigneten Mikroplatten-Waschgeräts 2 zumindest einen Abfallbehälter 1, in dem abgesaugte Flüssigkeiten 10 gesammelt werden. Dessen Form und Grösse ist für die Durchführung des erfindungsgemässen Verfahrens nicht entscheidend. Wichtig ist jedoch, dass der Abfallbehälter 1 im Wesentlichen luftdicht verschliessbar ausgebildet ist. Zudem ist der Abfallbehälter 1 bevorzugt vakuumtauglich ausgebildet, verformt sich also nicht unter einem Unterdruck oder Vakuum. Auf diese Weise kann sichergestellt werden, dass durch die Saugpumpen-Funktion ein genügend tiefer Unterdruck im Abfallbehälter 1 angelegt werden kann, um das erfindungsgemässe Verfahren durchzuführen. Dem Fachmann sind die verschiedenen Arten des luftdichten Abschliessens gut bekannt. Beispielhaft seien hier selbstdichtende Gewinde an Deckel 12 und Behälter-Unterteil genannt (siehe Figur 1). Beispielsweise kann ein aufschraubbarer Deckel elastisch ausgebildet sein, so dass zum Dichten zusätzlich eine Klemmwirkung genutzt wird. Ebenfalls kann die Dichtwirkung durch Dichtelemente 13 wie Gummidichtungen verstärkt werden (nicht gezeigt). Ebenso kann die Dichtung einzig z.B. durch GummiDichtungen erzielt werden, ohne dass Gewinde zum Einsatz kommen (siehe Figur 2 und 3). Solche Dichtsysteme sind aus dem Stand der Technik ebenfalls gut bekannt.

Die Form und Grösse des vom Mikroplatten-Waschgerät 2 umfassten Abfallbehälter 1 ist für die Durchführung des erfindungsgemässen Verfahrens nicht relevant. Lediglich beispielhaft ist daher an dieser Stelle die Nalgene^{®} 10 I Flasche, Art. Nr.: 226-0020 aus Polypropylen (Thermo Fisher Scientific, Kamstrupvej 90, 4000 Roskilde, Dänemark) genannt. Alternative Behältermaterialien sind beispielsweise Glas oder auch Chromstahl. Je nach Bedarf kann auch ein kleinerer Behälter von beispielsweise 5 I oder 3 I, oder alternativ ein grösserer Behälter von 20 I oder bis 50 I verwendet werden.

Diese Unabhängigkeit von der Form und Grösse des Abfallbehälters 1 wird durch das Festlegen einer Schwellen-Zeit erreicht. Diese Schwellenzeit wird für ein definiertes Luft-Restvolumen bestimmt. Dieses Luft-Restvolumen ist ein Sicherheitsvolumen, um das, egal wie gross der verwendete Abfallbehälter 1 gewählt ist, dieser nicht mehr befüllt werden soll. Ist dieses Sicherheitsvolumen einmal bestimmt, wird es für sämtliche verwendbare Abfallbehälter 1 angewendet. Wird also ein Sicherheitsvolumen von 3 l bestimmt, gilt dieses sowohl für Abfallbehälter von 5 l Totalvolumen als auch für solche mit 20 l oder gar 50 l Totalvolumen. Im Vordergrund steht dabei die Überlegung, dass, egal, wie viel Abfallflüssigkeit ein Behälter aufnehmen kann, zur Sicherheit immer ein Luftvolumen (Restvolumen) von 3 I frei bleiben soll. So kann auf eine einfache Art und Weise gewährleistet werden, dass der Behälter auf keinen Fall überfüllt wird.

Wie in Figur 2 dargestellt, kann das zum Durchführen des erfindungsgemässen Verfahrens geeignete Mikroplatten-Waschgerät 2 auch zwei hintereinander geschaltete Abfallbehälter 1,33 umfassen. Der zweite, vom Waschkopf 8 aus gesehen hintere Abfallbehälter 33 dient dabei als ein Sicherheitsbehälter für den Fall, dass die aspirierte Flüssigkeit zur Schaumbildung neigt und durch den Unterdruck Schaum dennoch aus dem Abfallbehälter in Richtung Pumpe gesogen wird ("foam trap" 33). Zwar stellt dieser zweite Abfallbehälter 33 ein zusätzlich Volumen zum Auffangen von Flüssigkeiten bereit. Dies hat jedoch keine Auswirkungen auf das erfindungsgemässe Verfahren selbst, da es, wie bereits erwähnt, durch das Festlegen eines "universellen Restvolumen" im Wesentlichen unabhängig ist von dem tatsächlich zur Verfügung stehenden, maximalen Behältervolumen. Wichtig ist, dass dieses zusätzliche Volumen durch die foam trap 33 in einer vorhergehenden Kalibrier-Messung erfasst wird. Der zeitliche Druckverlauf des Unterdruck-Abbaus in dem Abfallbehälter 1 und in einem zuvor festgelegten Unterdruck-Testbereich verändert sich nicht bei gleichem Testbereich aber verschiedenem Auffang-Volumen. Tatsächlich ist die Verwendung eines zusätzlichen, zweiten Abfallbehälters 34 gemäss Figur 2 sogar bevorzugt.

Aus den Figuren 1 bis 3 ist ersichtlich, dass die Pumpe 3 zum Erzeugen eines Unterdrucks über eine Leitung 6' mit dem Abfallbehälter 1 verbunden ist, während der Abfallbehälter 1 wiederum über eine separate Leitung 6 mit der Wasch-Nadel 5 verbunden ist. Umfasst das verwendete Mikroplatten-Waschgerät 2 einen Waschkopf 8 mit mehr als einer Wasch-Nadel 5, geht die Leitung 6 in dem Waschkopf 8 in das entsprechende, oben erwähnte Kanalsystem über. Dieses verzweigt sich entsprechend der Anzahl der Wasch-Nadeln 5, und jeweils ein Ast mündet dann in jeweils eine Wasch-Nadel 5. Werden Nadel-Paare aus jeweils einer Aspirier- und einer Dispensier-Nadel verwendet, umfasst der Waschkopf 8 zwei separate Kanalsysteme (als ein Aspirier- und ein Dispensiersystem). Auch diese sind entsprechend verzweigt ausgebildet. Die Anordnung der notwendigen Leitungen 6, 6', 6", deren Dimensionen sowie verwendete Materialien sind dem Fachmann gut bekannt und sollen daher an dieser Stelle nicht weiter diskutiert werden. Exemplarisch sei als verwendbares Material Polyvinylchlorid (PVC) genannt. Solche PVC-Leitungen haben den Vorteil, dass sie weich und formbar sind und so platzsparend in das Mikroplatten-Waschgerät 2 integriert werden können. Ebenfalls beispielhaft für verwendbare Innendurchmesser dieser Leitungen ist ein Innendurchmesser von 8 mm genannt. Dies entspricht einem Querschnitt von 50.26 mm².

Entsprechend ihrer Länge und ihres Innendurchmessers weisen die für Mikroplatten-Waschgeräte 2 verwendeten Leitungen ein eigenes Innenvolumen auf. Dieses ist im Vergleich mit dem Behältervolumen jedoch sehr klein und wird beim Kalibrieren des Geräts erfasst. Da es jedoch immer deutlich kleiner ist als das Volumen der verwendeten Abfallbehälter, hat das Leitungsvolumen selbst keinen relevanten Einfluss auf die Durchführung des erfindungsgemässen Verfahrens.

Wie in den Figuren 1 bis 3 dargestellt, umfasst das Mikroplatten-Waschgerät 2 zum Durchführen des erfindungsgemässen Verfahrens ein Ventil 7 an der Leitung 6 zwischen dem Abfallbehälter 1 und der zumindest einen Wasch-Nadel 5 (bzw. dem Waschkopf 8). Zusätzlich steht ein weiteres Ventil 20 zwischen dem Abfallbehälter 1 und der Pumpe 3 zur Verfügung. Dieses weitere Ventil kann beispielsweise direkt von der Pumpe 3,3',16 umfasst sein. Dies ist in Figur 1 der Fall, daher ist dieses weitere Ventil nicht explizit in dieser Figur 1 dargestellt. Für eine solche Pumpe mit internem Ventil ist beispielhaft die Thomas Membranpumpe des Typs 8011 ZVP 35 erwähnt. Falls die zum Erzeugen eines Unterdrucks verwendete Pumpe 3 kein internes Ventil aufweist, ist dieses zusätzliche Ventil 20 an der Leitung 6' zwischen dem Abfallbehälter 1 und der Pumpe 3 angeordnet. Wichtig ist, dass nach Erzeugen eines Unterdrucks in dem Abfallbehälter 1 die pumpenseitige Leitung 6' zum Abfallbehälter 1 abgesperrt werden kann. Geeignete Ventile sind einfache Durchgangsventile, beispielsweise das 2/2 Wege Ventil 0115 der Firma Christian Bürkert GmbH & Co. KG (Christian-Bürkert-Strasse 13-17; 74653 Ingelfingen, Deutschland).

Bevorzugt ist das Ventil 7 an der Leitung 6 möglichst nah zur Wasch-Nadel 5 bzw. zum Waschkopf 8 hin angeordnet. Auf diese Weise kann das direkt verfügbare Flutungsvolumen vor dem Ventil 7 klein gehalten werden.

Das in den Figuren 1 bis 3 dargestellte Ventil 7 kann gemäss dem erfindungsgemässen Verfahren zum Auslösen eines Unterdruck-Abbaus in dem Abfallbehälter geöffnet werden. In dieser Variante würde die Luft durch die Öffnungen der Wasch-Nadeln 5 in die Leitung 6 und den Abfallbehälter 1 einströmen. In Figur 3 ist an der Leitung 6 zwischen dem Ventil 7 und dem Abfallbehälter 1 ein zusätzliches Entlüftungs-Ventil 34 an einem T-Stück dargestellt. Diese Ausgestaltungs-Variante ermöglicht es, dass zum Unterdruck-Abbau Luft nicht durch die Wasch-Nadeln 5 in den Behälter 1 einströmt, sondern durch das geöffnete Ventil 34. In diesem Fall kann das Ventil 7 geschlossen bleiben. Auch in dieser Variante ist die Unabhängigkeit des erfindungsgemässen Verfahrens von der Ausbildung des Waschkopfes 8 gegeben. Das Entlüftungs-Ventil 34 ist dabei als ein 2-Wege-Ventil ausgebildet.

Im Folgenden sind drei verschiedene Waschköpfe vorgestellt, die mit einem definierten Ventil (Bürkert Magnetventil Typ 0115 A6,0) und einer definierten Leitung austauschbar verwendet werden können:

| | |
|---|---|
| - Standard-96er Waschkopf: | 0.9 mm Innendurchmesser je Nadel; |
| | 61 mm² Gesamtquerschnitt; |
| - 384er Waschkopf: | 0.5 mm Innendurchmesser je Nadel; |
| | 75.4 mm² Gesamtquerschnitt; |
| - 96er Indexing Waschkopf: | 0.8 mm Innendurchmesser je Nadel; |
| | 48.2 mm² Gesamtquerschnitt; |
| - Ventil: | 6 mm Wirkdurchmesser |
| | 28.3 mm² Querschnitt |
| - Leitung: | 8 mm Innendurchmesser |
| | 50.2 mm² Querschnitt |

Analog zu der Pumpe 3 kann zum Durchführen des erfindungsgemässen Verfahrens ebenfalls der bereits in dem Mikroplatten-Waschgerät 2 vorhandene, interne Drucksensor 4 verwendet werden. Durch Schliessen des Ventils 7 kann im Abfallbehälter 1 zum Durchführen des erfindungsgemässen Verfahrens durch die Pumpe 3 ein Unterdruck angelegt werden. Dabei ist der Drucksensor 4 zum Bestimmen eines Luftdrucks in dem Abfallbehälter 1 mit diesem wirkverbunden angeordnet. Bevorzugt ist der Drucksensor 4 an der Leitung 6 zwischen dem Ventil 7 und dem Abfallbehälter 1 positioniert (siehe Figur 1). Als ein für das Durchführen des erfindungsgemässen Verfahrens geeignete Drucksensor 4 sei beispielhaft ein Sensor der SQ253-WET-WET Serie der Firma Sensor Technics genannt (Sensortechnics GmbH, 82178 Puchheim, Deutschland).

Grundsätzlich ist es von Vorteil, wenn ein spritzwassergeschützter bzw. ein spritzwasserunempfindlicher Drucksensor 4 verwendet wird. Ein aus dem Stand der Technik bekannter Spritzwasserschutz besteht darin, dass der Sensor 4 nicht direkt an der Leitung 6 angebracht ist, sondern dass vor dem Sensor 4 eine kurze zusätzliche Schutzleitung angebracht ist, die mit der Leitung 6 in Verbindung steht. Eine solche zusätzliche Leitung kann beispielsweise als ein T-Stück ausgebildet sein.

Alternativ kann der Drucksensor 4 auch im Deckel 12 des Abfallbehälters 1 angeordnet sein, solange er vom Spritzwasser geschützt ist. Werden zwei nacheinander angeordnete Abfallbehälter 1 verwendet, genügt ein Drucksensor 4 an einem der beiden Deckel 12 (siehe Figur 2). Ebenso denkbar ist, dass der Drucksensor 4 nicht am Deckel sondern direkt am Abfallbehälter 1 angeordnet ist (siehe Figur 3). Das Positionieren des Drucksensors 4 am Deckel 12 oder am Abfallbehälter 1 birgt jedoch das Risiko, dass Flüssigkeit auf den Sensor 4 kommt und ihn so funktional beeinträchtigt. Gegebenenfalls müssen hier zusätzliche Schutzstrukturen vor dem Sensor angebracht werden.

Alternativ kann der Drucksensor 4 auch an der Leitung 6' zwischen dem Abfallbehälter 1 und der Saugpumpe 3 angeordnet sein. Wichtig ist, dass der Drucksensor 4 immer so mit dem Abfallbehälter wirkverbunden ist, dass mit ihm der Luftdruck in diesem Abfallbehälter bestimmbar ist, und dass das Risiko, durch Flüssigkeitsspritzer in der Funktion eingeschränkt zu werden, so gering wie möglich ist. Daher ist die in Figur 1 gezeigte Position des Drucksensors 4 die bevorzugte.

Das für das Durchführen des erfindungsgemässen Verfahrens geeignete Mikroplatten-Waschgerät 2 umfasst neben dem mit dem Abfallbehälter 1 wirkverbundenen Drucksensor 4 ebenfalls eine Sensorsteuerung 14, welche die detektierten Daten des Drucksensors 4 empfängt und verarbeitet. Die Zuordnung der Sensorsteuerung 14 zu einer geräte-spezifischen Firmware oder Software ist von der elektronischen Organisation des Mikroplatten-Waschgeräts 2 und den verwendeten Hardware-Komponenten abhängig und gehört zum Wissen des Fachmanns.

Wie in den Figuren 2 und 3 gezeigt, kann das zum Durchführen des erfindungsgemässen Verfahrens geeignete Mikroplatten-Waschgerät 2 einen Filter 11 als Schutz der Pumpe vor Verunreinigungen, wie z.B. Flüssigkeit, die aus den Abfallbehältern 1 in die Leitung zur Pumpe gelangt ist, umfassen. Filter können optional sowohl für Saugpumpen, kombinierte Saug-/Druckpumpen 3' und Druckpumpen 16 verwendet werden. Bevorzugt ist ein Filter zwischen der Pumpe 3,3' und dem Abfallbehälter 1 angeordnet. Die Verwendung von Filtern zum Schutz der Pumpen gehört ebenfalls zum Wissen eines Fachmanns und wird daher an dieser Stelle ebenfalls nicht weiter erläutert. Zur Veranschaulichung werden an dieser Stelle beispielhaft die Filter LYF 0300.008 der Firma Metzger Technik GmbH & Co. KG (Bertha-Benz-Strasse 1, 71655 Vaihingen / Enz, Deutschland) und der Filter SteriVent 002103 der Firma Arbor Technologies (Whatman plc, James Whatman Way, Maidstone, Kent, ME 14 2LE, Vereinigtes Königreich) genannt; beides sind geeignete und aus dem Stand der Technik bekannte Filter.

In der Figur 3 ist ein Mikroplatten-Waschgerät 2 nicht nur mit dem Aspiriersystem sondern auch mit dem Dispensiersystem dargestellt. Wie bereits erwähnt, umfasst ein Mikroplatten-Waschgerät sowohl das Aspiriersystem als auch das Dispensiersystem. Dabei wird mit einer Druckpumpe 16 ein Überdruck erzeugt, mit dem zum Dispensieren Flüssigkeit 10 aus einem Vorratsbehälter 9 über Leitungen 6" in die Wasch-Nadeln 5 und schliesslich in die Wells einer Mikroplatte 17 transportiert wird. In Figur 3 ist ein modifiziertes Mikroplatten-Waschgerät 2 gezeigt, bei dem ein Ventil 28 des Dispensiersystems als ein 3-Wege-Ventil ausgebildet ist. Mittels dieses 3-Wege-Ventils 28 ist die Druckpumpe 16 nicht nur mit dem Dispensiersystem sondern zusätzlich auch mit dem Aspiriersystem verbunden. So kann in einer alternativen Ausführungsform des erfindungsgemässen Verfahrens ein Überdruck in dem Abfallbehälter 1 erzeugt werden, und dann über die Bestimmung einer Testzeit eines Überdruck-Abbaus in einem vorbestimmten Überdruck-Testbereich erfasst werden, ob dieser Abfallbehälter noch befüllbar ist oder nicht. Auch hier liegt die Auswahl der Druckpumpe im Rahmen des Wissens des Fachmanns, beispielhaft sei die Pumpe 72100165M2 der Firma Thomas (Gardner Denver Thomas GmbH, Benzstrasse 28, 82178 Puchheim, Deutschland) genannt.

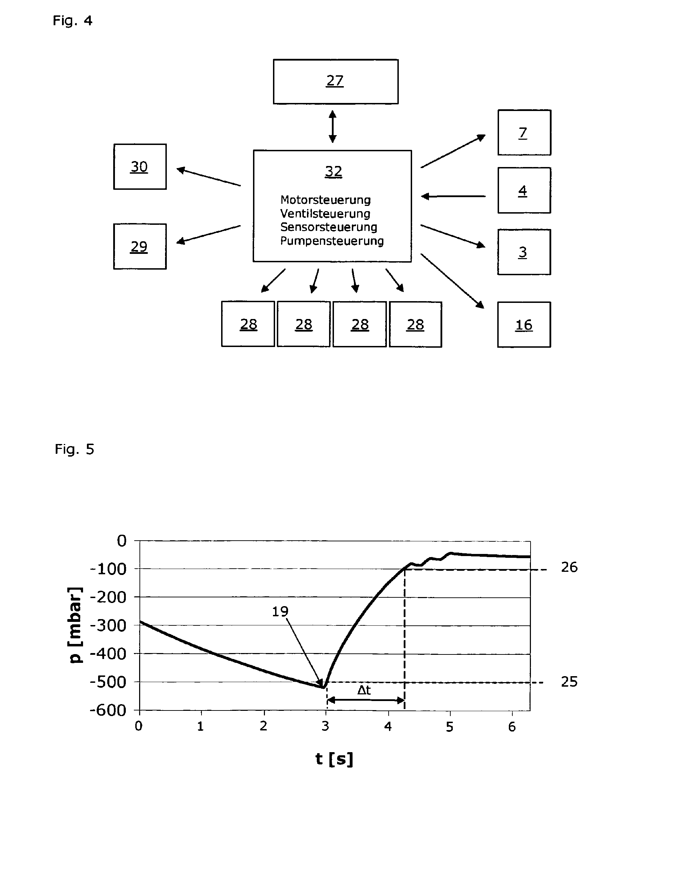

Figur 4 zeigt eine schematische Übersicht über ein Schaltschema eines Mikroplatten-Waschgeräts 2, welches zum Durchführen des erfindungsgemässen Verfahrens geeignet ist. Das Mikroplatten-Waschgerät 2 umfasst eine zentrale VerarbeitungsEinheit 32 (CPU, central processing unit) mit zumindest einer Motorsteuerung, einer Ventilsteuerung, einer Sensorsteuerung und einer Pumpensteuerung. Mit diesen Steuerungen werden beispielsweise die Motoren 29,30 für den Waschkopf 8 und den Plattentransport und somit Bewegungen von Waschkopf 8 und Plattentransport gesteuert. Über die Pumpensteuerung kann die Vakuumpumpe und die Druckpumpe 16 gesteuert werden. Mit der Ventilsteuerung wird das Öffnen und Schliessen der Ventile 28 der Vorratsbehälter 9 sowie des Ventils 7 zwischen Waschkopf 8 und Abfallbehälter 1 gesteuert. Umfassen die verwendeten Pumpen interne Ventile, werden diese durch die Pumpensteuerung erfasst. Haben die verwendeten Pumpen keine internen Ventile und sind entsprechende Ventile 20 an der Leitung 6' vor der Pumpe 3 angeordnet, werden diese ebenfalls durch die Ventilsteuerung erfasst. Schliesslich werden über eine Sensorsteuerung 14 die vom Drucksensor 4 detektierten Daten empfangen und verarbeitet. Zudem wird ein Bedienungsfelds 27 des Mikroplatten-Waschgeräts 2 über die zentrale Verarbeitungseinheit 32 gesteuert, und Daten des Bedienungsfelds 27 werden von der zentralen Verarbeitungseinheit 32 verarbeitet. Inwieweit die Steuerung in einer Firmware oder Software kodiert ist, ist für die Durchführung des erfindungsgemässen Verfahrens nicht relevant und kann je nach Anforderungen an das Mikroplatten-Waschgerät 2 variieren.

Das erfindungsgemässe Verfahren zum Bestimmen eines Luftvolumens 15 in einem Abfallbehälter 1 von einem Mikroplatten-Waschgerät 2 wird unter Verwendung eines Mikroplatten-Waschgeräts 2 durchgeführt, wie es oben beschreiben wurde. Dabei umfasst das Mikroplatten-Waschgerät 2 zumindest eine Wasch-Nadel 5 zum Aspirieren von Flüssigkeiten aus einem Probengefäss wie z.B. einem Well einer Mikroplatte. Zudem umfasst es zumindest einen Abfallbehälter 1, in dem die aspirierte Flüssigkeit 10 aufgefangen und gesammelt wird. Für diesen Abfallbehälter soll mit dem erfindungsgemässen Verfahren erfasst werden, ob der Abfallbehälter 1 durch weiteres Aspirieren noch weiter gefüllt werden kann, ohne überzulaufen. Dieser Abfallbehälter 1 ist im Wesentlichen luftdicht verschliessbar. Dies ist notwendig, damit durch die Pumpe 3 ein Unterdruck in dem Abfallbehälter 1 aufgebaut werden kann. Die Pumpe 3 des Mikroplatten-Waschgeräts 2 ist dabei über eine Leitung 6' mit dem Abfallbehälter 1 verbunden, während der Abfallbehälter 1 wiederum über eine Leitung 6 mit der zumindest einen Wasch-Nadel 5 verbunden ist. Zum Bestimmen eines Luftdrucks in dem Abfallbehälter umfasst das Mikroplatten-Waschgerät 2 zudem zumindest einen Drucksensor 4 und eine Sensorsteuerung 14. Der Drucksensor 4 ist dabei so mit dem Abfallbehälter 1 wirkverbunden, dass er zum Bestimmen des Luftdrucks in diesem Behälter 1 geeignet ist. Schliesslich umfasst das Mikroplatten-Waschgerät 2 zum Absperren und Öffnen der Leitung 6 zwischen der zumindest einen Wasch-Nadel 5 und dem Abfallbehälter 1 ein Ventil 7, während die pumpenseitige Leitung 6' zum Abfallbehälter absperrbar ist. Wie oben ausführlich diskutiert, kann das Mikroplatten-Waschgerät 2 zusätzliche oder alternative Merkmale aufweisen.

Anhand der Figur 5 wird das erfindungsgemässe Verfahren nun genauer beschrieben. Hier ist ein exemplarischer zeitlicher Druckverlauf, wie er während der Durchführung des erfindungsgemässen Verfahrens detektierbar ist, dargestellt. Die Druckangaben in dieser Figur sind jeweils in Relation zum Umgebungsdruck angegeben, dem entsprechend die Bezugsgrösse "Null" zugeordnet wurde.

Zum Erfassen, ob ein Abfallbehälter 1 befüllbar ist oder nicht, wird zunächst ein Unterdruck-Testbereich vorbestimmt. Dazu werden zwei Grenzdrücke 25,26 festgelegt, die diesen Unterdruck-Testbereich umschliessen. Diese Grenzdrücke 25,26 kennzeichnen die äusseren beiden Bereichs-Grenzen und gehören zum Unterdruck-Testbereich. Dabei sind beide Grenzdrücke 25,26 kleiner als der aktuelle Umgebungsdruck: Der obere Grenzdruck 26 begrenzt den Testbereich gegenüber dem Umgebungsdruck. Der untere Grenzdruck 25 ist tiefer als der obere Grenzdruck. Bevorzugt werden die Grenzdrücke 25,26 in dem Speichermedium des Mikroplatten-Waschgeräts 2 gespeichert, um eine Automatisierung des erfindungsgemässen Verfahrens zu ermöglichen.

In der in Figur 5 gezeigten Messung wurden die Grenzdrücke des Unterdruck-Testbereichs wie folgt definiert:

| | |
|---|---|
| Oberer Grenzdruck 26: | 100 mbar unter dem Umgebungsdruck; |
| Unterer Grenzdruck 25: | 500 mbar unter dem Umgebungsdruck. |

Ist der Unterdruck-Testbereich festgelegt, wird in dem Abfallbehälter 1 ein Unterdruck angelegt. Hierzu wird das Ventil 7, das an der Leitung 6 zwischen der zumindest einen Wasch-Nadel 5 oder dem Waschkopf 8 und dem Abfallbehälter 1 angeordnet ist, geschlossen. Der Unterdruck wird dann durch Einschalten der Pumpe 3, welche zum Erzeugen eines Unterdrucks ausgebildet ist, aufgebaut. Um wieviel der Luftdruck in dem Abfallbehälter 1 erniedrigt wird, ist abhängig von der Pumpenkapazität und von der Wahl des unteren Grenzdrucks 25 des vorbestimmten Unterdruck-Testbereichs. Ist der untere Grenzdruck 25 beispielsweise bei 600 mbar unter dem Umgebungsdruck festgelegt, sollte mit der Pumpe 3 zumindest ein Unterdruck von ebenfalls 600 mbar unter Umgebungsdruck oder tiefer aufgebaut werden. Ob und um wie viel der aufgebaute Unterdruck tiefer ist als der untere Grenzdruck 25, liegt im Wissen des Fachmanns. Zu berücksichtigen sind zumindest Geräte-Spezifitäten (z.B. von Mikroplatten-Waschgerät 2 und Pumpe 3) sowie die Beurteilung, wie viel Zeit das Durchführen des erfindungsgemässen Verfahrens beanspruchen soll.

Mit dem Drucksensor 4 und der Sensorsteuerung 14 kann bereits der Unterdruck-Aufbau und die für diesen benötigte Zeit verfolgt werden. Für das Erfassen des zeitlichen Unterdruck-Aufbaus und -Abbaus können die vom Drucksensor 4 gemessenen Daten kontinuierlich oder gepulst, beispielsweise mit einer Frequenz von 100 Hz, ausgewertet werden. Ein beispielhafter, zeitlicher Druckverlauf eines Unterdruck-Aufbaus ist in der Figur 5 ab einem Druck von etwa 300 mbar unter dem Umgebungsdruck dargestellt (t = 1 bis ca. 3 Sekunden). Dieser Figur 5 kann ebenfalls entnommen werden, dass in diesem beispielhaften Verfahren der erzeugte Unterdruck den unteren Grenzdruck 25 des Unterdruck-Testbereichs etwas unterschreitet.

Gemäss dem erfindungsgemässen Verfahren basiert die Beurteilung der Befüllbarkeit eines Abfallbehälters 1 im Wesentlichen auf der Auswertung des zeitlichen Druckverlaufs eines Unterdruck-Abbaus in dem Unterdruck-Testbereich. Alternativ dazu kann der zeitliche Unterdruck-Aufbau in dem Unterdruck-Testbereich ausgewertet werden: Dazu wird beispielsweise und bevorzugt eine Standardpumpe mit konstanter Leistung eingesetzt, so dass die Zeit, bis die Pumpe einen bestimmten Unterdruck erzeugt hat, ebenfalls proportional zum freien Gasvolumen des Behälters ist. Als weitere Alternative zum erfindungsgemässen Verfahren kann an Stelle von Unterdruck ein Überdruck entsprechend verwendet werden. Die Anpassung des erfindungsgemässen Verfahrens an diese alternativen Vorgehensweisen liegt im Wissen des Fachmanns und soll daher an dieser Stelle nicht weiter beschrieben werden.

Zum Erzeugen des Unterdruck-Abbaus wird dann zunächst das Ventil 20 geschlossen. Dies kann z.B. durch die Steuerung der Pumpenfunktion selbst erfolgen, z.B. wenn das Ventil 20 in der Pumpe 3 integriert ist. Oder das Schliessen des Ventils 20 erfolgt über eine separate Ventilsteuerung, z.B. wenn das Ventil 20 separat von der Pumpe 3 an der Leitung 6' angeordnet ist. Durch Schliessen des Ventils 20 wird der Unterdruck-Bereich örtlich abgeschlossen und begrenzt.

Der Unterdruck-Abbau in dem Abfallbehälter 1 wird schliesslich durch das Öffnen 19 des Ventils 7, das an der Leitung 6 zwischen der Wasch-Nadel 5 bzw. dem Waschkopf 8 und dem Abfallbehälter 1 angeordnet ist, ausgelöst. Der Unterdruck wird abgebaut, indem gezielt Luft über die Wasch-Nadel 5 in den Abfallbehälter 1 einströmen kann. Bevorzugt wird für das Durchführen des erfindungsgemässen Verfahrens ein Waschkopf 8 mit 96 Aspirier- und 96 Dispensiernadeln oder mit 384 Aspirier- und 384 Dispensiernadeln verwendet. Zwar weist, wie bereits dargestellt, jede einzelne Wasch-Nadel 5 einen deutlich geringeren Innendurchmesser als die Leitung 6 oder das geöffnete Ventil 7 auf und würde so - allein gesehen - den "bottleneck" für das einströmbare Luftvolumen darstellen. Die Summe aller vorhandenen Aspirier- und Dispensiernadeln eines verwendeten Waschkopfs 8 dagegen stellt einen Gesamt-Strömungsquerschnitt zur Verfügung, der deutlich grösser ist als der Strömungsquerschnitt der Leitung 6 und der des geöffneten Ventils 7. Damit ist das Ventil 7 das das einströmende Luftvolumen begrenzende Element im Mikroplatten-Waschgerät 2. Entsprechend kann aber auch die Leitung 6 das das einströmende Luftvolumen begrenzende Element sein, wenn ein Ventil 7 verwendet wurde, das geöffnet einen grösseren Strömungsquerschnitt aufweist als die verwendete Leitung 6. In jedem Fall bedeutet dies, dass das zeitliche Verhalten des Unterdruck-Abbaus nicht von dem verwendeten Waschkopf abhängig ist, und somit von jedem geeigneten Mikroplatten-Waschgerät 2 unabhängig vom verwendeten Waschkopf 8 durchführbar ist - solange die Wasch-Nadeln 5 dieses Waschgeräts 2 nicht das den Luftstrom begrenzende Element ist.

Weist das Mikroplatten-Waschgerät 2 ein zusätzliches Entlüftungsventil 34 zwischen dem Ventil 7 vor dem Waschkopf 8 und dem Abfallbehälter 1 auf, wie in Figur 3 gezeigt, kann alternativ der Unterdruck-Abbau in dem Abfallbehälter 1 durch Öffnen dieses Entlüftungs-Ventils 34 ausgelöst werden. Das Ventil 7 bleibt dabei geschlossen. In diesem Fall wurden zum vorhergehenden Erzeugen des Unterdrucks in dem Abfallbehälter 1 entsprechend beide Ventile 7,34 geschlossen. Entscheidend ist, dass auch bei der Verwendung dieses zusätzlichen Entlüftungsventils 34 die Unabhängigkeit von dem verwendeten Waschkopf 8 erhalten bleibt. Der "bottleneck" für das einströmbare Luftvolumen ist hier analog entweder das Ventil 7 oder das Entlüftungsventil 34.

Zum Auswerten des zeitlichen Druckverlaufs während des Unterdruck-Abbaus werden der Druck in dem Abfallbehälter 1 und die Test-Zeit 21 für den Unterdruck-Abbau zwischen dem unteren Grenzdruck 25 und dem oberen Grenzdruck 26 des Unterdruck-Testbereichs gemessen. Ein solcher gemessener, exemplarischer Druckverlauf ist in Figur 5 dargestellt: mit dem Öffnen 19 des Ventils 7 strömt Luft in den Abfallbehälter 1, und der Druck in diesem Behälter nähert sich dem Umgebungsdruck. Die Test-Zeit 21 entspricht dabei dem Zeitfenster Δt für den Unterdruck-Abbau, gemessen ab dem Passieren des unteren Grenzdrucks 25 bis zum Erreichen des oberen Grenzdrucks 26.

Zum Erfassen, ob der Abfallbehälter 1 noch befüllbar ist oder nicht, wird die für diesen Abfallbehälter 1 gemessene Test-Zeit 21 mit einer vor der Messung festgelegten Schwellen-Zeit 22 verglichen. Diese Schwellenzeit 22 wird für ein bestimmtes Mikroplatten-Waschgerät 2 festgelegt; sie wurde in einer separaten Kalibrier-Messung vorhergehend für ein willkürlich festgelegtes Sicherheits-Restvolumen und den für die Test-Zeit 21 gewählten Unterdruck-Testbereich gemessen. Dieses Sicherheits-Restvolumen wird so festgelegt, dass es für sämtliche, verwendbare Abfallbehälter 1 angewandt werden kann, unabhängig von deren Form und Grösse. Eine zuvor gemessene Zeit für einen Unterdruck-Abbau eines frei gewählten Abfallbehälters 1 mit einem definierten Sicherheits-Restvolumen, um das der Abfallbehälter 1 des Mikroplatten-Waschgeräts 2 nicht mehr befüllt werden soll, wird also gemäss dem erfindungsgemässen Verfahren sozusagen universal für das Mikroplatten-Waschgerät 2 festgelegt. Voraussetzung für diese "Universalität" ist, dass der gleiche Unterdruck-Testbereich und die gleiche Anordnung und Dimension von Ventil 7 und Leitung 6 für die Kalibrier-Messung und die Test-Messungen verwendet wird. Wird zudem ein Mikroplatten-Waschgerät 2 mit einer sogenannten foam-trap 33 verwendet, also mit einen zweiten, nachgeschalteten "Sicherheits-Abfallbehälter", muss entsprechend dieses zusätzliche Luftvolumen auch in der Kalibrier-Messung mit erfasst werden. So kann die Test-Zeit 21 direkt mit dem Sicherheits-Restvolumen der Schwellen-Zeit 22 korreliert werden, ohne dass das Volumen der foam-trap 33 separat in den Vergleich einbezogen werden muss.

Ergibt der Vergleich einer für einen Abfallbehälter 1 mit im Wesentlichen unbekanntem Befüllungsgrad gemessenen Test-Zeit 21 mit der zuvor festgelegten Schwellen-Zeit 22, dass die Test-Zeit 21 die Schwellen-Zeit 22 unterschreitet, wird entschieden, dass der Abfallbehälter 1 nicht befüllbar ist. Diese Konstellation weist darauf hin, dass sich in dem Abfallbehälter 1 nur noch ein Luftvolumen befindet, das kleiner ist als das zuvor willkürlich festgelegte Sicherheits-Restvolumen. Ergibt dieser Vergleich dagegen, dass die Test-Zeit 21 gleich der Schwellen-Zeit 22 ist oder diese überschreitet, wird entschieden, dass der Abfallbehälter 1 befüllbar ist. In diesem Fall ist das sich in dem Abfallbehälter 1 befindliche Luftvolumen grösser als das Sicherheits-Restvolumen, und es kann somit noch eine (nicht definierte) Flüssigkeitsmenge in den Abfallbehälter 1 aspiriert werden.

Das erfindungsgemässe Verfahren basiert damit auf einem Unterdruck-Testbereich, der sowohl für die Kalibrier-Messung(en) als auch für die eigentliche TestMessung(en) angewendet wird. Um eine sinnvolle, auswertbare Zeitmessung für einen Unterdruck-Abbau in dem Unterdruck-Testbereich zu ermöglichen, sollte dieser Testbereich zumindest 100 mbar umfassen. Die Grösse des Testbereichs obliegt dem Fachmann. Durch Erweiterung dieses Testbereichs kann dabei bis zu einem gewissen Masse die Messgenauigkeit verbessert werden. Dagegen sollte jedoch abgewogen werden, dass eine sehr lange Zeitmessung für einen Benutzer eines Mikroplatten-Waschgeräts 2 nicht unbedingt zumutbar ist. Es gilt also insbesondere zwischen zur Verfügung stehende (Kunden-)Zeit und Messgenauigkeit abzuwägen. Bevorzugt umfasst der Unterdruck-Testbereich 200 mbar, besonders bevorzugt 400 mbar. Er kann bei entsprechender Pumpenkapazität jedoch bis zu 950 mbar umfassen.

Der Unterdruck-Testbereich wird durch die Wahl des unteren Grenzdrucks 25 und des oberen Grenzdrucks 26 festgelegt. Der obere Grenzdruck 26 ist bevorzugt um mindestens 50 mbar vom Umgebungsdruck entfernt. So kann sichergestellt werden, dass in dem Testbereich keine Druckschwankungen detektiert werden, sondern ein kontinuierlicher Druckaufbau (also ein kontinuierlicher Unterdruck-Abbau) messbar ist. Solche Druckschwankungen sind in der Figur 5 zu sehen; es können beispielsweise Mess-Artefakte sein, ausgelöst durch die Grenzen der Messgenauigkeit des Drucksensors. Bevorzugt ist der obere Grenzdruck 26 ausgewählt aus einem Druckbereich von 50 mbar bis 300 mbar unter dem Umgebungsdruck, besonders bevorzugt ist der obere Grenzdruck 26 100 mbar unter dem Umgebungsdruck. Figur 5 zeigt einen Unterdruck-Testbereich mit diesem besonders bevorzugten oberen Grenzdruck 26 von 100 mbar unter dem Umgebungsdruck.

Der untere Grenzdruck 25 wird im Wesentlichen basierend auf der Pumpenkapazität und der bevorzugten Grösse des Testbereichs festgelegt. Bevorzugt wird der untere Grenzdruck 25 ausgewählt aus einem Druckbereich von 800 mbar bis 150 mbar unter dem Umgebungsdruck. Besonders bevorzugt ist der untere Grenzdruck 25 500 mbar unter dem Umgebungsdruck. Figur 5 zeigt einen Unterdruck-Testbereich mit diesem besonders bevorzugten unteren Grenzdruck 25 von 500 mbar unter dem Umgebungsdruck.

Die zwei den Unterdruck-Testbereich definierenden Grenzdrücke 25,26 werden bevorzugt in einem Speichermedium des Mikroplatten-Waschgeräts 2 gespeichert. Beispielsweise sei an dieser Stelle ein EPROM (erasable programmable read-only memory) genannt. Dieses Speichermedium gehört damit zum Gerät, beispielsweise zur zentralen Verarbeitungseinheit 32. Die Auswahl und Anordnung des Speichermediums liegt im Wissen des Fachmanns. Bevorzugt erfolgt das Speichern durch den Hersteller, kann aber auch, bei entsprechendem Bedarf, durch den Benutzer durchgeführt werden. Das Speichern kann zudem in einer Geräte-Firmware oder einer Software erfolgen. Das Speichern in einer Geräte-Firmware hat den Vorteil, dass diese Grenzdrücke 25,26 nur einmalig festgelegt werden, und der Benutzer ohne zusätzlichen Aufwand das erfindungsgemässe Verfahren automatisiert durch das Mikroplatten-Waschgerät 2 ablaufen lassen kann. Soll dem Benutzer oder auch dem Hersteller die Möglichkeit gegeben werden, die Grenzdrücke 25,26 ändern zu können, wird das Speichern in einer Software bevorzugt. Die Wahl liegt entsprechend den Anforderungen an das Mikroplatten-Waschgerät 2 und an das erfindungsgemässe Verfahren ebenfalls im Rahmen des Wissens des Fachmanns.

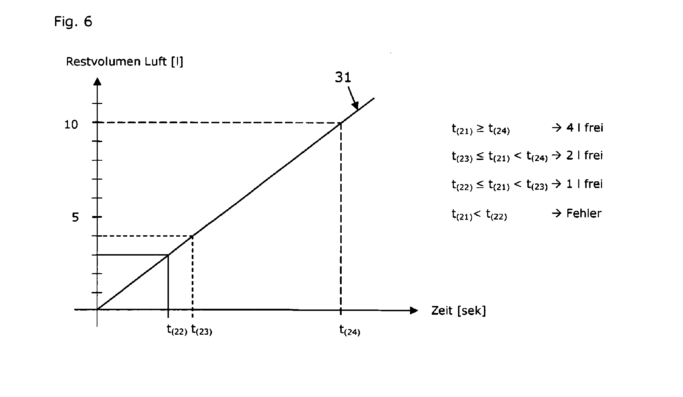

Figur 6 zeigt schematisch das Verhältnis zwischen verschiedenen Restvolumina in einem Abfallbehälter 1 und den entsprechenden, messbaren Zeiten in einem definierten Unterdruck-Testbereich. Das erfindungsgemässe Verfahren basiert auf der Tatsache, dass für ein bestimmtes Restvolumen immer im Wesentlichen die gleiche Zeit des Unterdruck-Abbaus in dem gleichen Unterdruck-Testbereich messbar ist, und zwar unabhängig von der tatsächlichen Behältergrösse. Dementsprechend kann für einen Unterdruck-Testbereich eine "universale" Schwellen-Zeit 22 festgelegt werden, die für im Wesentlichen alle in dem Mikroplatten-Waschgerät verwendbaren Abfallbehälter 1 gilt.

Die Schwellen-Zeit 22 ist die Zeit eines Unterdruck-Abbaus in dem Unterdruck-Testbereich für ein Restvolumen eines Abfallbehälters 1, welches bevorzugt ausgewählt ist aus einem Volumenbereich von 1.5 l bis 4.5 l. Ein solches Restvolumen ist für Abfallbehälter 1 von einem maximalen Füllvolumen von beispielsweise 5 l bis hin zu beispielsweise 50 l anwendbar. Besonders bevorzugt ist die Schwellen-Zeit 22 für ein Restvolumen eines Abfallbehälters 1 von 3l festgelegt. Eine solche Schwellen-Zeit t₍₂₂₎ ist in der Figur 6 eingezeichnet.

Bevorzugt wird die Schwellen-Zeit 22 in dem Speichermedium des Mikroplatten-Waschgeräts 2 gespeichert. Ergibt der Vergleich einer gemessenen Test-Zeit 21 mit der festgelegten Schwellen-Zeit 22, dass der Abfallbehälter 1 nicht mehr befüllbar ist, wird bevorzugt ein Signal zum Wechseln oder Leeren des Abfallbehälters 1 ausgelöst. Das Auslösen erfolgt dabei typischerweise über eine Steuerung (beispielsweise über einen Prozessor der zentralen Verarbeitungseinheit 32). Dieses Signal kann ein entsprechender Hinweis in der Anzeige 27 des Mikroplatten-Waschgeräts 2 sein. Alternativ ist beispielsweise auch das Aufleuchten einer farbigen Lampe am Gerät 2 möglich. Solche Signale sind aus dem Stand der Technik bekannt und werden daher an dieser Stelle nicht weiter diskutiert.

Beim erfindungsgemässen Verfahren wird vor der Messung der Test-Zeit 21 zudem eine erste Toleranz-Zeit 23 festgelegt. Analog zur Schwellen-Zeit 22 wird diese erste Toleranz-Zeit 23 in einer vorhergehenden Kalibriermessung bestimmt. Sie ist die Zeit eines Unterdruck-Abbaus in dem Unterdruck-Testbereich für ein Restvolumen, welches grösser ist als das Restvolumen für die Schwellen-Zeit 22. Das Restvolumen für die erste Toleranz-Zeit 23 ist um ein Volumen, ausgewählt aus einem Volumenbereich von 1 l bis 2 l, grösser als das Restvolumen für die Schwellen-Zeit 22.

In Figur 6 ist eine solche erste Toleranz-Zeit t₍₂₃₎ für ein beispielhaftes Restvolumen von 4 l eingezeichnet. Diese erste Toleranz-Zeit 23 stellt für den Aspirier-Prozess mit dem Mikroplatten-Waschgerät 2 eine zusätzliche Sicherheitsstufe dar: Unterschreitet die für einen Abfallbehälter 1 mit unbekanntem Füllvolumen gemessene Test-Zeit 21 die erste Toleranz-Zeit 23, ist aber grösser als die Schwellen-Zeit 22, wird entschieden, dass der Abfallbehälter 1 befüllbar ist. Bevorzugt wird dabei die erste Toleranz-Zeit 23 in dem Speichermedium des Mikroplatten-Waschgeräts 2 gespeichert. Ergibt der Vergleich der Test-Zeit 21 mit der Schwellen-Zeit 22 und der ersten Toleranz-Zeit 23, dass der Abfallbehälter befüllbar ist, kann so beispielsweise eine Befüllungsmenge von 1 l oder 2 l Flüssigkeit freigeben werden. Diese Freigabe kann z.B. geräteintern erfolgen, sie kann alternativ oder zusätzlich über die Anzeige 27 des Mikroplatten-Waschgeräts 2 auch dem Benutzer mitgeteilt werden. Die Freigabe erfolgt bevorzugt ebenfalls durch die Steuerung. Die freigegebene Menge ist dabei eine vom Hersteller oder vom Benutzer willkürlich festgelegte, maximale Flüssigkeitsmenge, die durch das Mikroplatten-Waschgerät 2 aspiriert und in den Abfallbehälter 1 überführt werden soll. Das Festlegen liegt im Wissen des Fachmanns; dabei werden beispielsweise der Bedarf und das Mikroplatten-Waschgerät 2 beziehungsweise die zur Verfügung stehenden Waschprogramme berücksichtigt.

Zudem wird beim erfindungsgemässen Verfahren vor der Messung der Test-Zeit 21 eine zweite Toleranz-Zeit 24 festgelegt. Analog zur Schwellen-Zeit 22 wird diese zweite Toleranz-Zeit 24 in einer vorhergehenden Kalibriermessung bestimmt. Sie ist die Zeit eines Unterdruck-Abbaus in dem Unterdruck-Testbereich für ein Restvolumen, welches grösser ist als das Restvolumen für die Schwellen-Zeit 22. Das Restvolumen für die zweite Toleranz-Zeit 24 ist um ein Volumen, ausgewählt aus einem Volumenbereich von 3 I bis 10 I, grösser als das Restvolumen für die Schwellen-Zeit 22.

In Figur 6 ist eine solche zweite Toleranz-Zeit t₍₂₄₎ für ein beispielhaftes Restvolumen von 10 I eingezeichnet. Auch diese zweite Toleranz-Zeit stellt eine zusätzliche Sicherheitsstufe für den Aspirier-Prozess mit dem Mikroplatten-Waschgerät 2 dar. Sie wird daher in Kombination mit der Schwellen-Zeit 22 und der ersten Toleranz-Zeit 23 für das erfindungsgemässe Verfahren festgelegt:

Die zweite Toleranz-Zeit 24 wird in Kombination mit der Schwellen-Zeit 22 und der ersten Toleranz-Zeit 23 festgelegt (siehe Figur 6), somit wird über den Vergleich der Test-Zeit 21 mit der zweiten Toleranz-Zeit 24 über die Befüllbarkeit des Abfallbehälters 1 entschieden. Auch hier werden bevorzugt die Schwellen-Zeit 22, die erste Toleranz-Zeit 23 und die zweite Toleranz-Zeit 24 in dem Speichermedium des Mikroplatten-Waschgeräts 2 gespeichert. Weitergehend wird dann eine differenziertere Entscheidung für die nachfolgenden Aspirier-Vorgänge getroffen: Unterschreitet die Test-Zeit 21 die zweite Toleranz-Zeit 24, ist jedoch grösser oder gleich der ersten Toleranz-Zeit 23, kann beispielsweise eine Befüllungsmenge von 2 l freigeben werden. Auch diese Freigabe kann geräte-intern erfolgen (z.B. durch die zentrale Verarbeitungseinheit 32), und/oder über die Anzeige 27 des Mikroplatten-Waschgeräts 2 dem Benutzer mitgeteilt werden; ebenso ist auch diese freigegebene Menge ist eine vom Hersteller oder vom Benutzer willkürlich festgelegte, maximale Flüssigkeitsmenge, die durch das Mikroplatten-Waschgerät 2 aspiriert und in den Abfallbehälter 1 überführt werden soll.

In Figur 6 ist beispielhaft eine Funktion 31 für die Zeit eines Unterdruck-Abbaus eines vorbestimmten Unterdruck-Testbereichs und verschiedene Restvolumen in einem Abfallbehälter 1 dargestellt. Werden für verschiedene definierte Restvolumen, wie in diesem Fall für 3 I, 4 I und 10 I Restvolumen, jeweils in einer Kalibrier-Messung die entsprechenden Zeiten gemessen, kann eine solche Kalibrier-Funktion 31 aufgestellt werden. Mathematisch notwendig sind dafür zumindest zwei gemessene Zeiten eines Unterruck-Abbaus in dem vorbestimmten Unterdruck-Testbereich. Eine solche Kalibrier-Funktion 31 kann z. B. auf einer Schwellen-Zeit 22 und einer zweiten Toleranz-Zeit 24 basieren, es können jedoch alternativ auch andere gemessene Zeiten verwendet werden. Anhand einer solchen Kalibrier-Funktion 31 kann dann für eine Testmessung für einen Abfallbehälter 1 mit unbekanntem Restvolumen bestimmt werden, wie gross das aktuelle Restvolumen ist, um das dieser Abfallbehälter 1 noch befüllbar ist. Ebenso oder alternativ kann die aktuell in diesem Abfallbehälter 1 vorhandene Flüssigkeitsmenge bestimmt werden. Hierfür sollte jedoch das maximale Behältervolumen dieses Abfallbehälters 1 bekannt sein. Die Schwellen-Zeit 22 ist die für die Kalibrier-Funktion 31 verwendete, gemessene Zeit.

Die Schwellen-Zeit 22, die erste Toleranz-Zeit 23 und die zweite Toleranz-Zeit 24 werden durch den Hersteller einmalig für ein Mikroplatten-Waschgerät 2 festgelegt und bevorzugt gespeichert. Das erfindungsgemässe Verfahren, insbesondere das Messen der Test-Zeit, im Gebrauch dieses Mikroplatten-Waschgeräts 2 wird bevorzugt automatisiert durchgeführt. Dabei kann beispielsweise dem Benutzer über die Anzeige 27 angezeigt werden, wenn das Verfahren durchgeführt wird; denkbar ist jedoch ebenfalls, dass das Durchführen des erfindungsgemässen Verfahrens "geräte-autonom" und ohne Informationen an den Benutzer durch Mikroplatten-Waschgerät 2 erfolgt. Besonders bevorzugt erfolgt das Durchführen der Test-Zeit-Messungen sowie das Freigeben von Befüllungsmengen "geräte-autonom", während, wenn festgestellt wird, dass der Abfallbehälter 1 nicht mehr befüllbar ist, dies dem Benutzer mitgeteilt wird (beispielweise durch ein Signal oder eine Anzeige).

Im vorangegangenen wurde das erfindungsgemässe Verfahren unter Verwendung einer Saugpumpenfunktion und eines Unterdrucks beschrieben. Tatsächlich ist es ebenfalls möglich, das erfindungsgemässe Verfahren unter Verwendung von Überdruck durchzuführen. Voraussetzung dafür ist, dass das Mikroplatten-Waschgerät 2 eine Druckpumpe 16 oder zumindest eine Druckpumpen-Funktion umfasst. Wie bereits diskutiert, kann die Druckpumpen-Funktion von einer kombinierten Saug-/Druckpumpe 3' bereitgestellt werden. Voraussetzung ist weiterhin, dass die Druckpumpe 16 bzw. die kombinierte Saug-/Druckpumpe 3' über Leitungen 6" mit dem zumindest einen Abfallbehälter 1 und der oder den Wasch-Nadel(n) 5 verbunden ist. In den Figuren 2 und 3 sind jeweils ein exemplarischer, schematischer Aufbau eines Mikroplatten-Waschgeräts 2 dargestellt, mit welchem mittels einer kombinierten Saug-/Druckpumpe 3' (Figur 2) oder einer separaten Druckpumpe 16 (Figur 3) das erfindungsgemässe Verfahren unter Verwendung von Überdruck durchführbar ist. Alternativ kann auch der zeitliche Druckverlauf eines Unterdruck- oder Überdruck-Aufbaus als Mass für die Befüllbarkeit eines Abfallbehälters 1 verwendet werden.

Das erfindungsgemässe Verfahren kann nicht nur zum Bestimmen eines Luftvolumens 15 in einem Abfallbehälter 1 eines Mikroplatten-Waschgeräts 2, bzw. des Restvolumens oder des aktuellen Füllstands in diesem Behälter 1 verwendet werden. Ebenfalls ist es möglich, unter Verwendung dieses Verfahrens eine Dichtheitsprüfung des Leitungssystems des Mikroplatten-Waschgeräts 2 durchzuführen. Die Prüfung kann dabei auf einem Vergleich a) einer gemessenen Test-Zeit Δt für einen definierten Abfallbehälter 1 mit einem bekannten Luftvolumen 15 mit b) bekannten Test-Zeiten einer Vergleichstabelle für den gleichen Abfallbehälter 1 mit gleichem Luftvolumen 15 basieren. Ist das System dicht, sollte die aktuell gemessene Test-Zeit im Wesentlichen mit der bekannten, in der Geräte-Firmware gespeicherten Test-Zeit übereinstimmen. Gibt es dagegen ein Leck im System, kann entweder der zum Durchführen des Verfahrens angelegte Unterdruck oder Überdruck gar nicht erreicht werden. Wird der Unterdruck bzw. Überruck erreicht, verkürzt sich die Test-Zeit zum Durchschreiten des entsprechend definierten Testbereichs, da Luft zusätzlich durch das Leck in das System strömen kann und so den Druckausgleich beschleunigt. Ist ein Filter zwischen der Pumpe und dem Abfallbehälter angeordnet und verstopft, oder ist die Pumpe defekt, verlängert sich die Zeit bis zum Erreichen des Unterdrucks bzw. Überdrucks.

Die Bezugszeichen in den Figuren weisen auf jeweils identische Elemente hin, auch wenn diese nicht in jedem Fall ausführlich beschrieben sind. Die Bezugszeichenliste ist Bestandteil der Offenbarung.

### Bezugszeichenliste:

- 1: Abfallbehälter
- 2: Mikroplatten-Waschgerät, Wascher
- 3: Pumpe mit Saugfunktion
- 3': kombinierte Saug-/Druck-Pumpe
- 4: Drucksensor
- 5: Wasch-Nadel
- 6, 6', 6": Leitungen
- 7: Ventil
- 8: Waschkopf
- 9: Vorratsbehälter
- 10: Flüssigkeit
- 11: Filter
- 12: Deckel
- 13: Dichtung
- 14: Sensorsteuerung
- 15: Luftvolumen
- 16: Druckpumpe
- 17: Mikroplatte
- 18: Wells der Mikroplatte
- 19: Öffnen des Ventils
- 20: Ventil
- 21: Test-Zeit
- 22: Schwellen-Zeit
- 23: erste Toleranz-Zeit
- 24: zweite Toleranz-Zeit
- 25: unterer Grenzdruck des Unterdruck-Testbereichs
- 26: oberer Grenzdruck des Unterdruck-Testbereichs
- 27: Bedienungsfeld/Anzeige von 2
- 28: Ventil von 9
- 29: Motor für Plattentransport
- 30: Motor für Waschkopf
- 31: Kalibriergerade
- 32: Zentrale Verarbeitungseinheit
- 33: Schaum-Falle
- 34: Ventil

## Patentansprüche

1. Verfahren zum Erfassen der Befüllbarkeit eines Abfallbehälters (1) von einem Mikroplatten-Waschgerät (2), wobei das Mikroplatten-Waschgerät (2) zumindest umfasst:
- eine Wasch-Nadel (5) zum Aspirieren von Flüssigkeiten (10);
- einen im Wesentlichen luftdicht verschliessbaren Abfallbehälter (1) zum Auffangen von aspirierten Flüssigkeiten (10);
- eine Pumpe (3) zum Erzeugen eines Unterdrucks in dem Abfallbehälter (1), wobei die Pumpe (3) und die Wasch-Nadel (5) jeweils über zumindest eine Leitung (6,6') mit dem Abfallbehälter (1) verbunden sind; und
- einen zum Bestimmen eines Luftdrucks in dem Abfallbehälter (1) mit diesem wirkverbundenen Drucksensor (4) und eine Sensorsteuerung (14);
**dadurch gekennzeichnet, dass** das Mikroplatten-Waschgerät (2) zudem ein Ventil (7) zum Absperren der Leitung (6) zwischen der Wasch-Nadel (5) und dem Abfallbehälter (1) umfasst;
und dass das Verfahren die folgenden Schritte umfasst:
a) Festlegen einer Schwellen-Zeit (22), die für ein bestimmtes Luft- bzw. Sicherheits-Restvolumen in einem Abfallbehälter (1) mittels einer separaten Kalibriermessung gemessen wurde, und welches die Zeit eines Unterdruck-Abbaus innerhalb eines vorbestimmten Unterdruck-Testbereichs für das Sicherheits-Restvolumen eines Abfallbehälters (1) ist;
b) Schliessen des Ventils (7) zwischen der Wasch-Nadel (5) und dem Abfallbehälter (1) und Erzeugen eines Unterdrucks in dem Abfallbehälter (1) bis zumindest einem unteren Grenzdruck (25) des vorbestimmten Unterdruck-Testbereichs;
c) Absperren der pumpenseitigen Leitung (6') zu dem Abfallbehälter (1);
d) Öffnen des Ventils (7) zwischen der Wasch-Nadel (5) und dem Abfallbehälter (1) und Auslösen eines Unterdruck-Abbaus in dem Abfallbehälter (1);
e) Messen des Drucks in dem Abfallbehälter (1) und Messen einer Test-Zeit (21) für den Unterdruck-Abbau zwischen dem unteren Grenzdruck (25) bis zu einem oberen Grenzdruck (26) des Unterdruck-Testbereichs, wobei der obere Grenzdruck (26) tiefer ist als der Umgebungsdruck;
f) Vergleichen der gemessenen Test-Zeit (21) mit der vor der Messung festgelegten Schwellen-Zeit (22), und
g) Entscheiden, dass:
g1) der Abfallbehälter (1) nicht befüllbar ist, wenn die Test-Zeit (21) die Schwellen-Zeit (22) unterschreitet, oder
g2) der Abfallbehälter (1) befüllbar ist, wenn die Test-Zeit (21) gleich ist wie die Schwellen-Zeit (22), oder
g3) der Abfallbehälter (1) befüllbar ist, wenn die Test-Zeit (21) die Schwellen-Zeit (22) überschreitet;
wobei vor der Messung gemäss Schritt e):
i) eine erste Toleranz-Zeit (23) festgelegt wird, welche die Zeit eines Unterdruck-Abbaus in dem Unterdruck-Testbereich für ein Restvolumen eines Abfallbehälters (1) ist, welches um ein erstes Volumen grösser ist als das im Schritt a) bestimmte Sicherheits-Restvolumen für die Schwellen-Zeit (22); und
ii) eine zweite Toleranz-Zeit (24) festgelegt wird, welche die Zeit eines Unterdruck-Abbaus in dem Unterdruck-Testbereich für ein Restvolumen eines Abfallbehälters (1) ist, welches um ein zweites Volumen grösser ist als die Summe des im Schritt a) bestimmten Sicherheits-Restvolumens für die Schwellen-Zeit (22) mit dem Restvolumen für die erste Toleranz-Zeit (23).

2. Verfahren nach Anspruch 1, **dadurch gekennzeichnet, dass** im Fall von:
g1) ein Signal zum Wechseln oder Leeren des Abfallbehälters (1) ausgelöst wird; oder
g2) eine Befüllungsmenge freigegeben wird; oder
g3) eine Befüllungsmenge freigegeben wird.

3. Verfahren nach Anspruch 2, **dadurch gekennzeichnet, dass** im Fall von g3):
- und wenn die Test-Zeit (21) zudem die erste Toleranz-Zeit (23) unterschreitet, eine Befüllungsmenge von 1 Liter freigegeben wird; oder
- und wenn die Test-Zeit (21) grösser oder gleich ist wie die erste Toleranz-Zeit (23) und die zweite Toleranz-Zeit (24) unterschreitet, eine Befüllungsmenge von 2 Litern freigegeben wird; oder
- und wenn die Test-Zeit (21) grösser oder gleich der zweiten Toleranz-Zeit (24) ist, eine Befüllungsmenge von 4 Litern freigegeben wird.

4. Verfahren nach einem der Ansprüche 1 bis 3, **dadurch gekennzeichnet, dass** das Sicherheits-Restvolumen eines Abfallbehälters (1) für die Schwellen-Zeit (22) ausgewählt ist aus einem Volumenbereich von 1.5 l bis 4.5 l.

5. Verfahren nach Anspruch 4, **dadurch gekennzeichnet, dass** das Sicherheits-Restvolumen eines Abfallbehälters (1) für die Schwellen-Zeit (22) 3 l beträgt.

6. Verfahren nach einem der vorhergehenden Ansprüche, **dadurch gekennzeichnet, dass** das Mikroplatten-Waschgerät (2) zudem ein Speichermedium umfasst, in welchem die Grenzdrücke (25,26), die Schwellen-Zeit (22), die erste Toleranz-Zeit (23) und die zweite Toleranz-Zeit (24) gespeichert werden.

7. Verfahren nach einem der Ansprüche 1 bis 6, **dadurch gekennzeichnet, dass** das Messen der Test-Zeit automatisch durchgeführt wird.

8. Verfahren nach einem der Ansprüche 2 bis 6, **dadurch gekennzeichnet, dass** die jeweilige Befüllungsmenge automatisch freigegeben wird.

9. Verfahren nach einem der vorhergehenden Ansprüche, **dadurch gekennzeichnet, dass** das erste Volumen ausgewählt wird aus einem Volumenbereich von 1 I bis 2 I.

10. Verfahren nach einem der vorhergehenden Ansprüche, **dadurch gekennzeichnet, dass** das zweite Volumen ausgewählt wird aus einem Volumenbereich von 3 l bis 10 l.

11. Verfahren nach Anspruch 10, **dadurch gekennzeichnet, dass** die zweite Toleranz-Zeit (24) für ein Restvolumen eines Abfallbehälters (1), welches um 7 l grösser ist als das Sicherheits-Restvolumen für die Schwellenzeit (22), bestimmt ist.

12. Verfahren nach einem der vorhergehenden Ansprüche, **dadurch gekennzeichnet, dass** basierend auf zumindest zwei gemessenen Zeiten eines Unterdruck-Abbaus in dem vorbestimmten Unterdruck-Testbereich eine Kalibrier-Funktion (31) erstellt wird, anhand welcher das aktuelle Restvolumen des Abfallbehälters (1), um das dieser noch befüllbar ist, oder die aktuelle Flüssigkeitsmenge in diesem Abfallbehälter (1) bestimmt wird, wobei zumindest eine der gemessenen Zeiten die Schwellenzeit (22) ist.

13. Verfahren nach einem der vorhergehenden Ansprüche, **dadurch gekennzeichnet, dass** der untere Grenzdruck (25) des Unterdruck-Testbereichs ausgewählt wird aus einem Druckbereich von 800 mbar bis 150 mbar unter dem Umgebungsdruck, und dass der obere Grenzdruck (26) ausgewählt wird aus einem Druckbereich von 50 mbar bis 300 mbar unter dem Umgebungsdruck.

14. Verfahren nach Anspruch 13, **dadurch gekennzeichnet, dass** der untere Grenzdruck (25) 500 mbar unter dem Umgebungsdruck und der obere Grenzdruck (26) 100 mbar unter dem Umgebungsdruck ist.

15. Verfahren nach einem der vorhergehenden Ansprüche, **dadurch gekennzeichnet, dass** es automatisch und geräte-autonom durchgeführt wird.

## Claims

1. A method for registering the filling potential of a waste container (1) of a microplate washing device (2), the microplate washing device (2) at least comprising:
a washing needle (5) for aspirating liquids (10);
a waste container (1), which is closable substantially airtight, for catching aspirated liquids (10);
a pump (3) for generating a partial vacuum in the waste container (1), wherein the pump (3) and the washing needle (5) are each connected via at least one line (6,6') to the waste container (1); and
a pressure sensor (4), which is operationally linked to the waste container (1) for determining an air pressure therein, and a sensor controller (14);
**characterized in that** the microplate washing device (2) further comprises a valve (7) for blocking the line (6) between the washing needle (5) and the waste container (1);
and **in that** the method comprises the following steps:
a) defining a threshold time (22) for an arbitrarily defined safety residual volume in a waste container (1) measured beforehand in a separate calibration measurement, which threshold time (22) is the time for a partial vacuum dissipation within a predetermined partial vacuum test range for the safety residual volume of a waste container (1);
(b) closing the valve (7) between the washing needle (5) and the waste container (1) and generating a partial vacuum in the waste container (1) at least to a lower limiting pressure (25) of the predetermined partial vacuum test range;
c) blocking the pump-side line (6') to the waste container (1);
d) opening the valve (7) between the washing needle (5) and the waste container (1) and triggering a partial vacuum dissipation in the waste container (1);
e) measuring the pressure in the waste container (1) and measuring a test time (21) for the partial vacuum dissipation between the lower limiting pressure (25) to an upper limiting pressure (26) of the partial vacuum test range, wherein the upper limiting pressure (26) is less than the ambient pressure;
f) comparing the measured test time (21) to the threshold time (22) established before the measurement, and
g) deciding that:
(g1) the waste container (1) is not fillable, if the test time (21) falls below the threshold time (22), or
(g2) the waste container (1) is fillable, if the test time (21) is equal to the threshold time (22) or
(g3) the waste container (1) is fillable, if the test time (21) exceeds the threshold time (22);
and wherein, prior to the measurement of step e):
i) a first tolerance time (23) is determined, the first tolerance time (23) being the time of a partial vacuum dissipation in the partial vacuum test range for a residual volume of a waste container (1) which is larger by a first volume than the residual volume for the safety residual volume defined in step a) for the threshold time (22); and
ii) a second tolerance time (24) is determined, the second tolerance time (24) being the time of a partial vacuum dissipation in the partial vacuum test range for a residual volume of a waste container (1) which is greater by a second volume than the sum of the safety residual volume defined in step a) for the threshold time (22) with the residual volume for the first tolerance time (23).

2. The method according to claim 1, **characterized in that** in the case of:
g1) a signal for changing or emptying the waste container (1) is triggered; or
g2) a filling quantity is made available; or
g3) a filling quantity is made available.

3. The method according to claim 2, **characterized in that** in the case of g3):
and if the test time (21) also falls below the first tolerance time (23), a filling quantity of 1 liter of liquid is made available; or
and if the test time (21) exceeds or is equal to the first tolerance time (23) and falls below the second tolerance time (24), a filling quantity of 2 liter of liquid is made available; or
and if the test time (21) exceeds or is equal to the second tolerance time (24), a filling quantity of 4 liter of liquid is made available.

4. The method according to one of claims 1 to 3, **characterized in that** the safety residual volume of a waste container (1) for the threshold time (22) is selected from a volume range of 1.5 liter to 4.5 liter.

5. The method according to claim 4, **characterized in that** the safety residual volume of a waste container (1) for the threshold time (22) is 3 liter.

6. The method according to one of the preceding claims, **characterized in that** the microplate washing device (2) further comprises a storage medium, in which the limiting pressures (25,26), the threshold time (22), the first tolerance time (23) and the second tolerance time (24) are stored.

7. The method according to one of claims 1 to 6, **characterized in that** the measurement of the test time is performed automatically.

8. The method according to one of claims 2 to 6, **characterized in that** the respective filling quantity is automatically made available.

9. The method according to one of the preceding claims, **characterized in that** the first volume is selected from a volume range of 1 liter to 2 liter.

10. The method according to one of the preceding claims, **characterized in that** the second volume is selected from a volume range of 3 liter to 10 liter.

11. The method according to claim 10, **characterized in that** the second tolerance time (24) is determined for a residual volume of a waste container (1), which is 7 liter greater than the safety residual volume for the threshold time (22).

12. The method according to one of the preceding claims, **characterized in that** based on at least two measured times of a partial vacuum dissipation in the predetermined partial vacuum test range, a calibration function (31) is established, on the basis of which the current residual volume of the waste container (1), by which it is still fillable, or the current liquid quantity in this waste container (1) is determined, at least one of the measured times being the threshold time (22).

13. The method according to one of the preceding claims, **characterized in that** the lower limiting pressure (25) of the partial vacuum test range is selected from a pressure range of 800 mbar to 150 mbar below the ambient pressure, and the upper limiting pressure (26) is selected from a pressure range of 50 mbar to 300 mbar below the ambient pressure.

14. The method according to claim 13, **characterized in that** the lower limiting pressure (25) is 500 mbar below the ambient pressure and the upper limiting pressure (26) is 100 mbar below the ambient pressure.

15. The method according to one of the preceding claims, **characterized in that** the method is performed automatically and autonomously in the device.

## Revendications

1. Procédé pour déterminer la capacité de remplissage d'un réservoir à déchets (1) d'un laveur de microplaques (2), le laveur de microplaques (2) comprenant au moins :
- une aiguille de lavage (5) pour aspirer des liquides (10) ;
- un réservoir à déchets (1) pouvant être fermé de manière sensiblement étanche à l'air pour recevoir les liquides aspirés (10) ;
- une pompe (3) pour créer une dépression dans le réservoir à déchets (1), la pompe (3) et l'aiguille de lavage (5) étant raccordées au réservoir à déchets (1) par le biais d'au moins une conduite (6, 6') ; et
- un capteur de pression (4) en liaison active avec le réservoir à déchets (1) pour déterminer une pression atmosphérique dans ce dernier, ainsi qu'une commande par capteurs (14) ;
**caractérisé en ce que** le laveur de microplaques (2) comprend en outre une soupape (7) pour bloquer la conduite (6) entre l'aiguille de lavage (5) et le réservoir à déchets (1) ;
et **en ce que** le procédé comprend les étapes consistant à :
a) définir un temps seuil (22) qui a été mesuré pour un certain volume résiduel d'air ou de sécurité dans un réservoir à déchets (1) par le biais d'une mesure de calibrage séparée, lequel temps correspond au temps de réduction de dépression à l'intérieur d'une plage d'essai de dépression prédéfinie pour le volume résiduel de sécurité d'un réservoir à déchets (1) ;
b) fermer la soupape (7) entre l'aiguille de lavage (5) et le réservoir à déchets (1) et créer une dépression dans le réservoir à déchets (1) jusqu'à au moins une pression limite inférieure (25) de la plage d'essai de dépression prédéfinie ;
c) bloquer la conduite (6') côté pompe en direction du réservoir à déchets (1) ;
d) ouvrir la soupape (7) entre l'aiguille de lavage (5) et le réservoir à déchets (1) et déclencher une réduction de dépression dans le réservoir à déchets (1) ;
e) mesurer la pression dans le réservoir à déchets (1) et mesurer un temps test (21) pour la réduction de dépression entre la pression limite inférieure (25) jusqu'à une pression limite supérieure (26) de la plage d'essai de dépression, la pression limite supérieure (26) étant plus basse que la pression ambiante ;
f) comparer le temps test mesuré (21) au temps seuil (22) prédéfini avant la mesure, et
g) décider :
g1) que le réservoir à déchets (1) ne peut pas être rempli lorsque le temps test (21) est inférieur au temps seuil (22) ; ou
g2) que le réservoir à déchets (1) peut être rempli lorsque le temps test (21) est identique au temps seuil (22) ; ou
g3) que le réservoir à déchets (1) peut être rempli lorsque le temps test (21) est supérieur au temps seuil (22) ;
dans lequel avant la mesure suivant l'étape e) :
i) il est déterminé un premier temps de tolérance (23), qui correspond au temps d'une réduction de dépression dans la plage d'essai de dépression pour un volume résiduel d'un réservoir à déchets (1), lequel est supérieur d'un premier volume par rapport au volume résiduel de sécurité déterminé à l'étape a) pour le temps seuil (22) ; et
ii) il est déterminé un deuxième temps de tolérance (24) qui correspond au temps d'une réduction de dépression dans la plage d'essai de dépression pour un volume résiduel d'un réservoir à déchets (1), lequel est supérieur d'un deuxième volume par rapport à la somme du volume résiduel de sécurité déterminé à l'étape a) pour le temps seuil (22) avec le volume résiduel pour le premier temps de tolérance (23).

2. Procédé selon la revendication 1, **caractérisé en ce que** dans le cas de :
g1) un signal se déclenche pour changer ou pour vider le réservoir à déchets (1) ; ou
g2) une quantité de remplissage est validée ; ou
g3) une quantité de remplissage est validée.

3. Procédé selon la revendication 2, **caractérisé en ce que** dans le cas de g3) :
- et lorsque le temps test (21) est en outre inférieur au premier temps de tolérance (23), une quantité de remplissage de 1 litre est validée ; ou
- et lorsque le temps test (21) est supérieur ou égal au premier temps de tolérance (23) et est inférieur au deuxième temps de tolérance (24), une quantité de remplissage de 2 litres est validée ; ou
- et lorsque le temps test (21) est supérieur ou égal au deuxième temps de tolérance (24), une quantité de remplissage de 4 litres est validée.

4. Procédé selon l'une des revendications 1 à 3, **caractérisé en ce que** le volume résiduel de sécurité d'un réservoir à déchets (1) pour le temps seuil (22) est choisi à partir d'une plage de volume comprise entre 1,5 l et 4,5 l.

5. Procédé selon la revendication 4, **caractérisé en ce que** le volume résiduel de sécurité d'un réservoir à déchets (1) pour le temps seuil (22) est de 3 l.

6. Procédé selon l'une des revendications précédentes, **caractérisé en ce que** le laveur de microplaques (2) comprend en outre un support de stockage dans lequel sont enregistrés les pressions limites (25, 26), le temps seuil (22), le premier temps de tolérance (23) et le deuxième temps de tolérance (24).

7. Procédé selon l'une des revendications 1 à 6, **caractérisé en ce que** la mesure du temps test s'effectue automatiquement.

8. Procédé selon l'une des revendications 2 à 6, **caractérisé en ce que** la quantité de remplissage correspondante est validée de façon automatique.

9. Procédé selon l'une des revendications précédentes, **caractérisé en ce que** le premier volume est choisi à partir d'une plage de volume comprise entre 1 l est 2 l.

10. Procédé selon l'une des revendications précédentes, **caractérisé en ce que** le deuxième volume est choisi à partir d'une plage de volume comprise entre 3 l et 10 l.

11. Procédé selon la revendication 10, **caractérisé en ce que** le deuxième temps de tolérance (24) est déterminé pour un volume résiduel d'un réservoir à déchets (1) qui est de 7 I plus important que le volume résiduel de sécurité pour le temps seuil (22).

12. Procédé selon l'une des revendications précédentes, **caractérisé en ce que**, en se basant sur au moins deux temps mesurés d'une réduction de dépression dans la plage d'essai de dépression prédéterminée, il est établi une fonction de calibrage (31) à l'aide de laquelle on détermine le volume résiduel actuel du réservoir à déchets (1) avec lequel ce dernier peut encore être rempli, ou bien on détermine la quantité de liquide actuelle dans ce réservoir à déchets (1), au moins un des temps mesurés étant le temps seuil (22).

13. Procédé selon l'une des revendications précédentes, **caractérisé en ce que** la pression limite inférieure (25) de la plage d'essai de dépression est choisie à partir d'une plage de pression comprise entre 800 mbar et 150 mbar en dessous de la pression ambiante, et **en ce que** la pression limite supérieure (26) est choisie à partir d'une plage de pression comprise entre 50 mbar et 300 mbar en dessous de la pression ambiante.

14. Procédé selon la revendication 13, **caractérisé en ce que** la pression limite inférieure (25) est 500 mbar en dessous de la pression ambiante et la pression limite supérieure (26) est 100 mbar en dessous de la pression ambiante.

15. Procédé selon l'une des revendications précédentes, **caractérisé en ce qu'**il est réalisé de façon automatique et autonome.
